# EUROPEAN PATENT APPLICATION

(11) **EP 4 338 819 A1**
(43) Date of publication of application: **20.03.2024**
(21) Application number: 23768454.3
(22) Date of filing: 25.07.2023
(51) Int. Cl.: B01D 53/00, B01D 53/62, B01D 53/22, B01D 53/26, F25J 3/02

(54) **APPARATUS AND PROCESS FOR CAPTURING CARBON DIOXIDE IN EXHAUST GAS**

(30) Priority: 25.07.2022 KR 20220091596; 27.12.2022 KR 20220185297; 18.07.2023 KR 20230092830
(71) Applicant: Airrane Co., Ltd., Cheongju-si, Chungcheongbuk-do 28121 (KR)
(72) Inventor: HA, Seong Yong, Seoul 05555 (KR); LEE, Sun Keun, Goyang-si, Gyeonggi-do 10360 (KR); MIN, Kwang Joon, Seoul 04999 (KR); LEE, Chung Seop, Daejeon 34049 (KR); YIM, Jin Hyuk, Cheongju-si, Chungcheongbuk-do 28123 (KR); HAN, Sang Hoon, Daejeon 34070 (KR); LIM, Chae Sung, Eumseong-gun, Chungcheongbuk-do 27717 (KR); SHIM, Jae Hoon, Cheongju-si, Chungcheongbuk-do 28425 (KR)
(74) Representative: V.O.
(86) International application number: PCT/KR2023/010747
(87) International publication number: WO 2024/025303

(57) **Abstract**

The present disclosure relates to a process and apparatus for capturing carbon dioxide in flue gas, and the present disclosure performs a carbon dioxide recovery separation membrane process using cold heat in a carbon dioxide liquefaction process through a separation tower, thereby reducing energy consumption and remarkably improving separation efficiency.

## Description

### [Technical Field]

The present disclosure relates to an apparatus and process for capturing carbon dioxide in flue gas.

### [Background Art]

Recently, as environmental issues such as global warming and climate change caused by greenhouse gases arise, carbon dioxide capture technology is being thoroughly studied to reduce greenhouse gas emissions, especially carbon dioxide emissions. The carbon dioxide capture technology may be largely classified into post-combustion, pre-combustion and oxyfuel combustion. The post-combustion CO₂ capture technology is sub-classified into a chemical absorption process using an amine-based or ammonia-based absorbent, a dry absorption process using a solid absorbent rather than an absorbent solution and a membrane separation process using a separation membrane.

In the carbon dioxide capture technology, the membrane separation process using the membrane is an eco-friendly process, and to increase the carbon dioxide concentration and make it easier to store and use, technology to obtain liquefied carbon dioxide by the introduction of a separation tower has been suggested. However, in the carbon dioxide recovery from low temperature gas obtained in the liquefaction process, it was essential to allow the gas to pass through the separation membrane after heating or cold heat recovery, requiring additional energy consumption.

To solve this problem, after repeated research, the inventors found that it is possible to increase the carbon dioxide separation efficiency and improve the carbon dioxide recovery without an additional process by allowing low temperature gas obtained in the liquefaction process to pass through the separation membrane while keeping the gas in the low temperature state, and completed the present disclosure.

### [RELATED LITERATURES]

### [PATENT LITERATURE]

(Patent Literature 1) Patent Literature 1. Korean Patent Publication No. 10-2021-0104469

### [Disclosure]

### [Technical Problem]

The present disclosure is designed to solve the above-described problem, and therefore the present disclosure is directed to providing a process and apparatus for capturing carbon dioxide in flue gas, including a carbon dioxide capture separation membrane, a separation tower and a carbon dioxide recovery separation membrane, wherein a carbon dioxide recovery process using the carbon dioxide recovery separation membrane makes use of cold heat in a carbon dioxide liquefaction process through the separation tower, thereby remarkably reducing energy consumption and remarkably improving separation efficiency.

### [Technical Solution]

An aspect of the present disclosure provides an apparatus for capturing carbon dioxide in flue gas, including: a first compressor configured to compress a first compressor feed gas including flue gas; a first capture separation membrane configured to separate a first capture separation membrane feed gas including the gas compressed by the first compressor into a first capture separation membrane permeate gas and a first capture separation membrane residual gas; a second compressor configured to compress a second compressor feed gas including the first capture separation membrane permeate gas; a liquefaction heat exchanger configured to cool down the gas compressed by the second compressor; a separation tower configured to separate the gas cooled by the liquefaction heat exchanger into a high purity carbon dioxide liquid and a carbon dioxide containing gas; and a first recovery separation membrane configured to separate the carbon dioxide containing gas into a first recovery separation membrane permeate gas and a first recovery separation membrane residual gas, and circulate the first recovery separation membrane permeate gas to the first compressor, the first capture separation membrane or the second compressor.

Another aspect of the present disclosure provides a process for capturing carbon dioxide in flue gas, including: a first compression step of compressing, by a first compressor, a first compressor feed gas including flue gas; a first capture step of feeding a first capture separation membrane feed gas including the gas compressed by the first compressor into a first capture separation membrane to separate into a first capture separation membrane permeate gas and a first capture separation membrane residual gas; a second compression step of compressing, by a second compressor, the first capture separation membrane permeate gas; a liquefaction step of cooling down, by a liquefaction heat exchanger, the gas compressed by the second compressor; a separation and purification step of feeding the gas cooled by the liquefaction heat exchanger into a separation tower to separate into a carbon dioxide containing gas and a high purity carbon dioxide liquid; and a first recovery step of feeding the carbon dioxide containing gas into a first recovery separation membrane to circulate a first recovery separation membrane permeate gas passing through the first recovery separation membrane to the first capture separation membrane or the second compressor.

### [Advantageous Effects]

The process and apparatus for capturing carbon dioxide in flue gas of the present disclosure reduced carbon dioxide emissions by recovering gas obtained in the separation tower through the separation membrane.

Additionally, the present disclosure may improve the carbon dioxide recovery efficiency by recovering carbon dioxide in gas obtained in the upper part of the separation tower using low temperature created in the separation tower (liquefaction process).

Additionally, the present disclosure may reduce carbon dioxide emissions and increase the fraction of carbon dioxide and thus increase separation efficiency by re-circulating the gas streams in the carbon dioxide capture process and apparatus.

### [Description of Drawings]

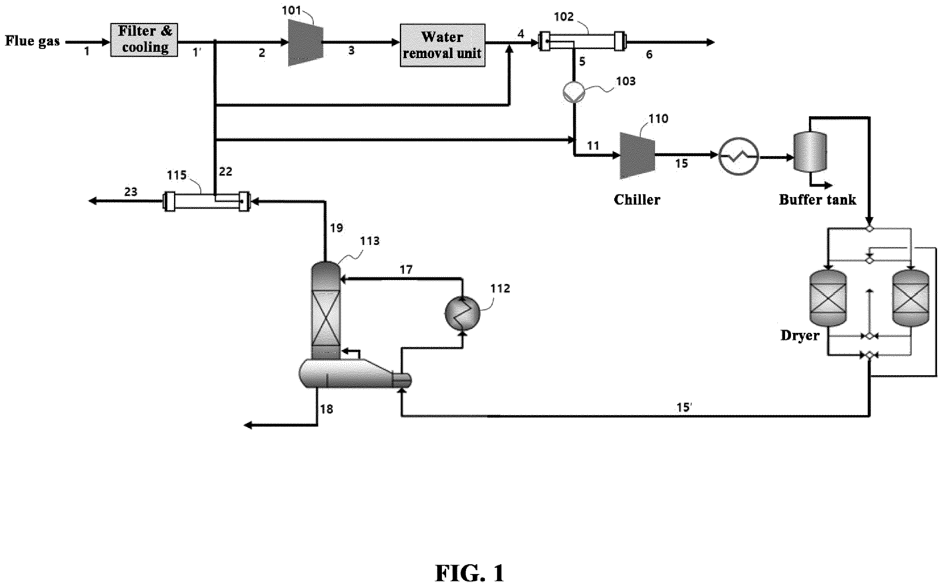

FIG. 1 is a diagram showing a process of capturing carbon dioxide in flue gas according to an embodiment of the present disclosure.

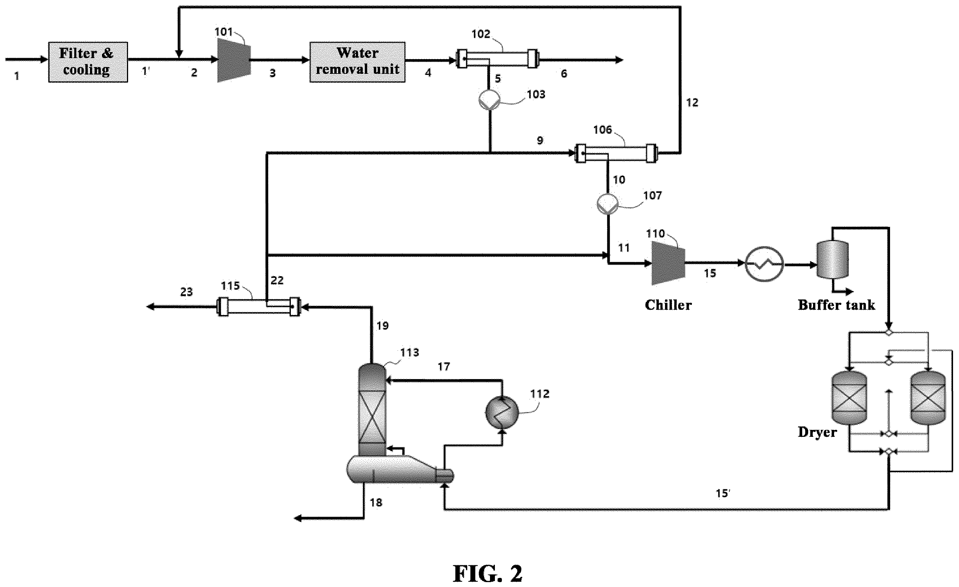

FIG. 2 is a diagram showing a process of capturing carbon dioxide in flue gas, including a second capture separation membrane according to another embodiment of the present disclosure.
FIG. 3 is a diagram showing a process of capturing carbon dioxide in flue gas, including a second capture separation membrane and a second recovery separation membrane according to another embodiment of the present disclosure.

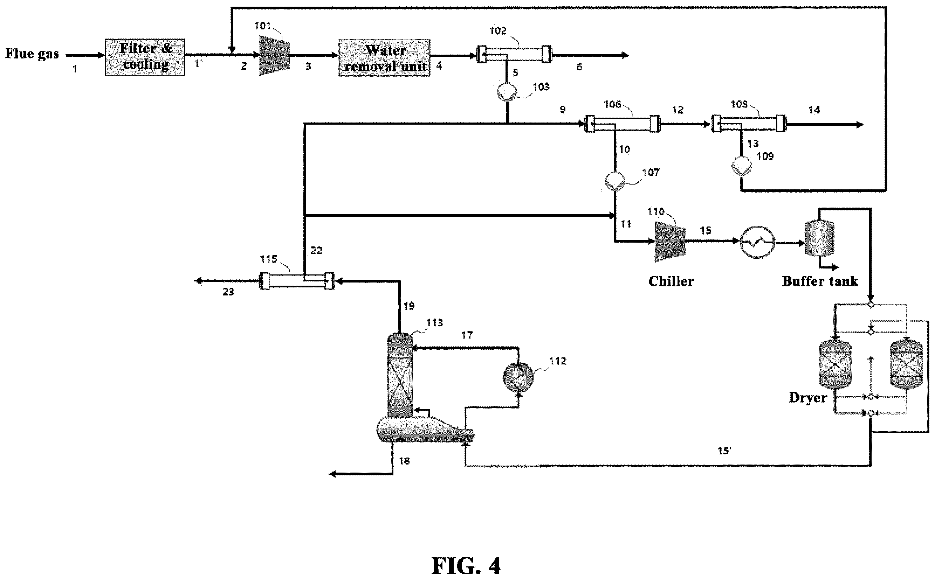

FIG. 4 is a diagram showing a process of capturing carbon dioxide in flue gas, including a second capture separation membrane and a #2-1 capture separation membrane according to another embodiment of the present disclosure.

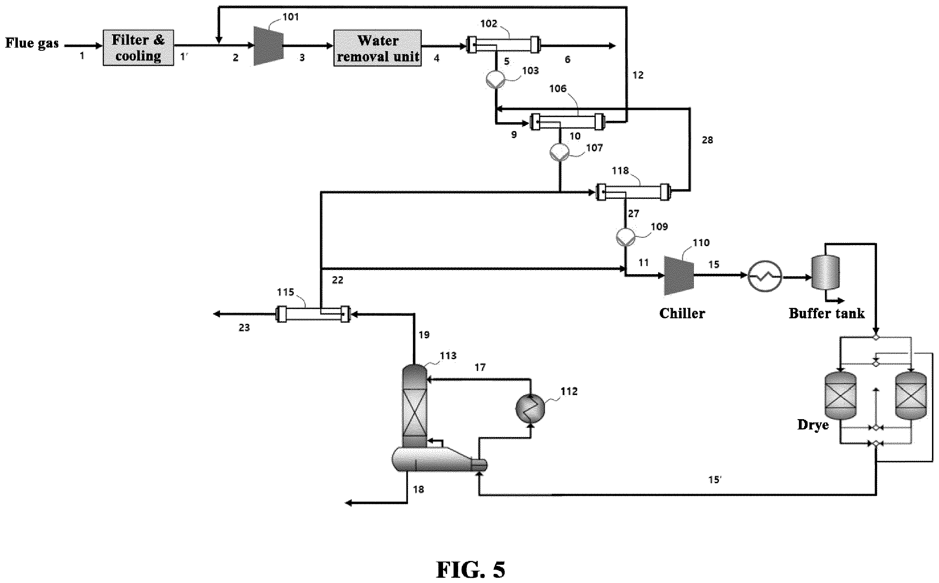

FIG. 5 is a diagram showing a process of capturing carbon dioxide in flue gas, including a second capture separation membrane and a third capture separation membrane according to another embodiment of the present disclosure.
FIG. 6 is a diagram showing a process of capturing carbon dioxide in flue gas, including a #1-1 capture separation membrane, a second capture separation membrane, a #2-1 capture separation membrane and a second heat exchanger network according to another embodiment of the present disclosure.
FIG. 7 is a diagram showing a process of capturing carbon dioxide in flue gas, including a second capture separation membrane and a second recovery separation membrane according to another embodiment of the present disclosure.

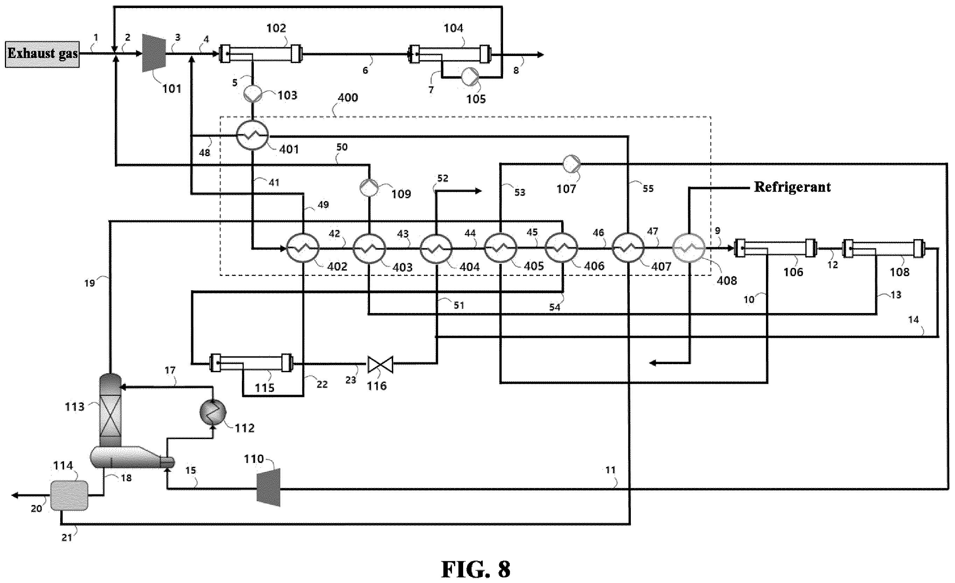

FIG. 8 is a diagram showing a process of capturing carbon dioxide in flue gas, including a #1-1 capture separation membrane, a second capture separation membrane, a #2-1 capture separation membrane, a second heat exchanger network and a dry ice production unit according to another embodiment of the present disclosure.
FIG. 9 is a diagram showing a process of capturing carbon dioxide in flue gas, including a second capture separation membrane, a #2-1 capture separation membrane, a first heat exchanger network, a second heat exchanger network and a dry ice production unit according to another embodiment of the present disclosure.
FIG. 10 is a diagram showing a process of capturing carbon dioxide in flue gas, including a second capture separation membrane, a #2-1 capture separation membrane, a second heat exchanger network and a dry ice production unit according to another embodiment of the present disclosure.
FIG. 11 is a diagram showing a process of capturing carbon dioxide in flue gas, including a second capture separation membrane, a second recovery separation membrane and a dry ice production unit according to another embodiment of the present disclosure.

### [Best Mode]

Hereinafter, the present disclosure will be described in more detail together with the accompanying drawings and embodiments.

An aspect of the present disclosure provides an apparatus for capturing carbon dioxide in flue gas, including: a first compressor 101 to compress first compressor feed gas 2 including flue gas 1; a first capture separation membrane 102 to separate first capture separation membrane feed gas 4 including the gas 3 compressed by the first compressor into first capture separation membrane permeate gas 5 and first capture separation membrane residual gas 6; a second compressor 110 to compress second compressor feed gas 11 including the first capture separation membrane permeate gas 5; a liquefaction heat exchanger 112 to cool down the gas 15 compressed by the second compressor; a separation tower 113 to separate the gas 17 cooled by the liquefaction heat exchanger into a high purity carbon dioxide liquid 18 and carbon dioxide containing gas 19; and a first recovery separation membrane 115 to separate the carbon dioxide containing gas 19 into first recovery separation membrane permeate gas 22 and first recovery separation membrane residual gas 23, and circulate the first recovery separation membrane permeate gas 22 to the first compressor 101, the first capture separation membrane 102 or the second compressor 110.

The present disclosure may further include a second capture separation membrane 106 to separate second capture separation membrane feed gas 9 including the first capture separation membrane permeate gas 5 into second capture separation membrane permeate gas 10 and second capture separation membrane residual gas 12, and in this instance, only the second capture separation membrane permeate gas 10 in the first capture separation membrane permeate gas 5 is compressed by the second compressor 110. When the present disclosure further includes the second capture separation membrane 106, it is preferred since it may be possible to achieve high carbon dioxide recovery even at low carbon dioxide concentration in flue gas.

The present disclosure may further include a dry ice production unit 114 including a chamber in which the high purity carbon dioxide liquid 18 is received and converted to dry ice 20 and an outlet through which residual carbon dioxide gas 21 not having been converted to dry ice exits. When the present disclosure further includes the dry ice production unit 114, it may be possible to improve the utilization of carbon dioxide that will be discarded as gas when producing the dry ice 20 from the high purity carbon dioxide liquid 18.

As used herein, the gas fed into the first capture separation membrane 102, the second capture separation membrane 106 or a third capture separation membrane 118 is referred to as capture separation membrane feed gas, and the capture separation membrane feed gas may include the gas 3 compressed by the first compressor, the first capture separation membrane feed gas 4, the first capture separation membrane permeate gas 5, the second capture separation membrane feed gas 9 and the second capture separation membrane permeate gas 10.

The present disclosure may further include a heat exchanger network to cool down the capture separation membrane feed gas by heat exchange with low temperature streams in the process before feeding the capture separation membrane feed gas into the capture separation membrane. When the present disclosure further includes the heat exchanger network, it may be possible to increase the carbon dioxide separation efficiency and significantly reduce the process energy by lowering the temperature of the capture separation membrane feed gas by cold heat recovery through heat exchange with the streams in the process.

According to an embodiment of the present disclosure, before feeding at least one capture separation membrane feed gas of the gas 3 compressed by the first compressor or the first capture separation membrane permeate gas 5 into the separation membrane, the present disclosure may further include the heat exchanger network to cool down the capture separation membrane feed gas by heat exchange with at least one of the first capture separation membrane permeate gas 5, the first capture separation membrane residual gas 6, the second capture separation membrane permeate gas 10, the second capture separation membrane residual gas 12, the carbon dioxide containing gas 19, the residual carbon dioxide gas 21, the first recovery separation membrane permeate gas 22, the first recovery separation membrane residual gas 23, second recovery separation membrane permeate gas 24 or second recovery separation membrane residual gas 25.

As used herein, the heat exchanger network for cooling down the gas 3 compressed by the first compressor fed into the first capture separation membrane is referred to as a first heat exchanger network 200, the heat exchanger network for cooling down the first capture separation membrane permeate gas 5 fed into the second capture separation membrane is referred to as a second heat exchanger network 300, 400, and the heat exchanger network for cooling down the second capture separation membrane permeate gas 10 fed into the third capture separation membrane 118 is referred to as a third heat exchanger network.

The present disclosure may include either the dry ice production unit 114 or the heat exchanger network, and preferably, may include both.

As used herein, the flue gas (exhaust gas) refers to a gas emitted from power generation plants, steelworks, chemical plants or the like, and is primarily produced by combustion reaction of fossil fuel (hydrocarbon) and basically contains carbon dioxide and water, and may further include nitrogen and unused oxygen in the presence of an oxygen-containing gas or air as an oxidant. Additionally, the flue gas may contain gaseous substances derived from impurities in the raw materials of the combustion process, for example, impurities such as hydrogen sulfide, sulfur oxide, nitrogen oxide, hydrochloric acid, mercury or the like, but the impurities may be present in trace amounts, or some of them may be substantially absent.

The first compressor 101 compresses the first compressor feed gas 2. The first compressor feed gas 2 is a gas including the flue gas 1, and to improve the carbon dioxide recovery, may be a mixed gas of the flue gas 1 and at least one of #1-1 capture separation membrane permeate gas 7, the second capture separation membrane residual gas 12, #2-1 capture separation membrane permeate gas 13 or the first recovery separation membrane permeate gas 22, preferably a mixed gas of the flue gas 1 and at least one of the #1-1 capture separation membrane permeate gas 7, the second capture separation membrane residual gas 12 or the #2-1 capture separation membrane permeate gas 13, and more preferably a mixed gas of the flue gas 1 and the #2-1 capture separation membrane permeate gas 13.

The first compressor 101 realizes a pressure ratio for the separation process of the first capture separation membrane 102 by compressing the first compressor feed gas 2, and specifically, may compress the feed gas to the pressure of 2 to 5 bar, and preferably 2.2 to 3.5 bar.

In case where the present disclosure further includes the heat exchanger network, cold heat recovery may improve the separation efficiency, which lowers the target pressure to which the first compressor 101 will compress, thereby increasing the separation efficiency with low energy consumption, and the first compressor 101 may compress the feed gas stream to the pressure of 1.1 to 3.5 bar, and preferably 1.2 to 2.0 bar.

The first capture separation membrane 102 separates the first capture separation membrane feed gas 4 including the gas 3 compressed by the first compressor into the first capture separation membrane permeate gas 5 and the first capture separation membrane residual gas 6.

Since the gas separation process through the separation membrane in the present disclosure is performed through the dissolution-diffusion mechanism, the separation efficiency changes depending on carbon dioxide selectivity (for example, CO₂/N₂) of the separation membrane, and the first capture separation membrane permeate gas 5 is relatively rich in carbon dioxide and the first capture separation membrane residual gas 6 is relatively deficient in carbon dioxide according to the selectivity of the separation membrane.

A vacuum pump 103 may be additionally installed at the permeation part of the first capture separation membrane permeate gas to improve the separation efficiency.

The first capture separation membrane feed gas 4 may be the gas 3 compressed by the first compressor, and to improve the carbon dioxide recovery, may be a mixed gas of the gas 3 compressed by the first compressor and at least one of the residual carbon dioxide gas 21 or the first recovery separation membrane permeate gas 22, and preferably a mixed gas of the gas 3 compressed by the first compressor, the residual carbon dioxide gas 21 and the first recovery separation membrane permeate gas 22.

In case where the present disclosure includes the second capture separation membrane 106, the first capture separation membrane permeate gas 5 is fed into the second capture separation membrane 106, and in case where the present disclosure does not include the second capture separation membrane 106, the first capture separation membrane permeate gas 5 is fed into the second compressor 110.

The present disclosure may further include a #1-1 capture separation membrane 104 to recover the residual carbon dioxide in the first capture separation membrane residual gas 6 that will be discharged.

In case where the apparatus for capturing carbon dioxide in flue gas of the present disclosure does not include the #1-1 capture separation membrane 104, the first capture separation membrane residual gas 6 may be discharged as gas in which carbon dioxide is deficient and nitrogen is dominant.

The #1-1 capture separation membrane 104 may separate the first capture separation membrane residual gas 6 into the #1-1 capture separation membrane permeate gas 7 that is relatively rich in carbon dioxide and #1-1 capture separation membrane residual gas 8 that is relatively deficient in carbon dioxide, and circulate the #1-1 capture separation membrane permeate gas 7 to the first compressor 101 to recover the residual carbon dioxide in the first capture separation membrane residual gas 6 that will be discharged in case where the #1-1 capture separation membrane 104 is not included.

In case where the present disclosure further includes the #1-1 capture separation membrane 104, the first capture separation membrane residual gas 6 is preferably fed into the #1-1 capture separation membrane 104 without heat exchange through the heat exchanger network, thereby increasing the separation efficiency through the low temperature process of the #1-1 capture separation membrane 104.

The #1-1 capture separation membrane residual gas 8 may be discharged as gas in which carbon dioxide is deficient and nitrogen is dominant.

A vacuum pump 105 may be additionally installed at the permeation part of the #1-1 capture separation membrane permeate gas 7 to improve the separation efficiency.

The second capture separation membrane 106 separates the second capture separation membrane feed gas 9 including the first capture separation membrane permeate gas 5 into the second capture separation membrane permeate gas 10 having higher carbon dioxide concentration than the first capture separation membrane permeate gas 5 and the second capture separation membrane residual gas 12 that is deficient in carbon dioxide.

A vacuum pump 107 may be additionally installed at the permeation part of the second capture separation membrane permeate gas to increase a pressure ratio before and after the separation membrane so as to discharge the second capture separation membrane permeate gas 10, thereby improving the carbon dioxide separation efficiency.

The second capture separation membrane feed gas 9 may be a mixed gas of the first capture separation membrane permeate gas 5 and at least one of the residual carbon dioxide gas 21, the first recovery separation membrane permeate gas 22, the second recovery separation membrane permeate gas 24 or the third capture separation membrane permeate gas 28 in order to improve the carbon dioxide recovery.

In case where the apparatus for capturing carbon dioxide in flue gas of the present disclosure includes the third capture separation membrane 118, the second capture separation membrane permeate gas 10 may be fed into the third capture separation membrane 118, and in case where the apparatus does not include the third capture separation membrane 118, the second capture separation membrane permeate gas 10 may be fed into the second compressor 110.

The second capture separation membrane residual gas 12 may be discharged, or may be fed into the first compressor 101 or a #2-1 capture separation membrane 108 to improve the carbon dioxide recovery.

According to an embodiment of the present disclosure, the present disclosure may further include the #2-1 capture separation membrane 108 to improve the carbon dioxide recovery.

The #2-1 capture separation membrane 108 separates the second capture separation membrane residual gas 12 into the #2-1 capture separation membrane permeate gas 13 having higher carbon dioxide concentration and #2-1 capture separation membrane residual gas 14 having lower carbon dioxide concentration, and circulates the #2-1 capture separation membrane permeate gas 13 to the first compressor 101 to improve the carbon dioxide recovery.

In case where the apparatus for capturing carbon dioxide in flue gas of the present disclosure does not include the #2-1 capture separation membrane 108, the second capture separation membrane residual gas 12 may be circulated to the first compressor 101 to improve the carbon dioxide recovery, and in case where the apparatus includes the #2-1 capture separation membrane 108, only the carbon dioxide rich #2-1 capture separation membrane permeate gas 13 in the second capture separation membrane residual gas 12 may be circulated to the first compressor 101, leading to a decrease in flow rate of the gas fed into the first compressor 101, which remarkably reduces necessary energy for compression, thereby increasing the economic efficiency of the process.

The #2-1 capture separation membrane residual gas 14 is discharged as gas in which carbon dioxide is deficient and nitrogen is dominant. The first capture separation membrane residual gas 6, the #1-1 capture separation membrane residual gas 8 and the first recovery separation membrane residual gas 23 are also nitrogen dominated gases. Accordingly, it may be mixed with low temperature gases among the nitrogen dominated gases, undergo cold heat recovery through the heat exchanger network and then discharged.

In case where the present disclosure further includes the #2-1 capture separation membrane 108, the second capture separation membrane residual gas 12 is preferably fed into the #2-1 capture separation membrane 108 without heat exchange through the first heat exchanger network 200 or the second heat exchanger network 300, to allow the #2-1 capture separation membrane 108 to perform the separation process at low temperature, thereby increasing the separation efficiency.

The present disclosure may further include the third capture separation membrane 118 to separate the second capture separation membrane permeate gas 10 into third capture separation membrane permeate gas 27 and third capture separation membrane residual gas 28 according to the carbon dioxide concentration in flue gas. When the carbon dioxide concentration in flue gas is very low, the third capture separation membrane 118 may be additionally introduced into the second capture separation membrane permeation part to improve the carbon dioxide recovery, and only the third capture separation membrane permeate gas 27 in the second capture separation membrane permeate gas 10 is fed into the second compressor 110.

The second compressor 110 compresses the second compressor feed gas 11 to the required pressure for the liquefaction process, preferably 22 to 50 bar, and preferably 22 to 31 bar. In this instance, the second compressor feed gas 11 may include any one of the first capture separation membrane permeate gas 5, the second capture separation membrane permeate gas 10 or the third capture separation membrane permeate gas 27.

In general, a compressor includes a cooler to remove water, and water in a stream is removed using the cooler, but a small amount of water remaining in the liquefaction process may cause damage and failure of a device such as a meter when it gets frozen. To prevent this, the apparatus for capturing carbon dioxide in flue gas of the present disclosure may further include a dryer to remove water from the liquefaction heat exchanger 112 feed gas. The water content in the gas stream having passed through the dryer may be, for example, about 50 ppm or less, preferably about 30 ppm or less, more preferably about 10 ppm or less, and most preferably substantially nearly zero.

The liquefaction heat exchanger 112 cools the gas 15 compressed by the second compressor down to the suitable temperature for separation and purification and carbon dioxide liquefaction in the separation tower 113, preferably -35 to -18°C. The refrigerant used in the liquefaction heat exchanger 112 may include Freon, nitrogen and propylene.

The separation tower 113 is supplied with the gas 17 cooled by the liquefaction heat exchanger, and the carbon dioxide containing gas 19 is obtained in the upper part and the high purity carbon dioxide liquid 18 is obtained in the lower part by separation and purification.

The molar concentration of carbon dioxide in the high purity carbon dioxide liquid 18 recovered in the lower part may be 99% or more, and may be 99.9% or more according to the purpose of use of carbon dioxide.

The carbon dioxide containing gas 19 may cool down the capture separation membrane feed gas by heat exchange between them through the heat exchanger network before it is fed into the first recovery separation membrane 115.

The dry ice production unit 114 includes the chamber in which the high purity carbon dioxide liquid 18 is received and converted to the dry ice 20 and the outlet through which the residual carbon dioxide gas 21 not having been converted to the dry ice 20 in the high purity carbon dioxide liquid 18 exits. In this instance, the dry ice production unit 114 may be supplied with all the high purity carbon dioxide liquid 18 produced, but in some circumstances, may be supplied with a portion of the high purity carbon dioxide liquid 18.

The chamber realizes the pressure and temperature ranges for pressurization and cooling of the high purity carbon dioxide liquid 18 to convert the high purity carbon dioxide liquid 18 to the dry ice 20, and in this instance, the pressure and temperature may be 0.3 to 1 bar and -80 to -45°C, and preferably 0.6 to 0.8 bar and -78 to -48°C.

The high purity carbon dioxide liquid 18 is not completely converted to the dry ice 20, yielding the residual carbon dioxide gas 21. In this instance, the temperature of the residual carbon dioxide gas 21 is very low temperature of - 78 to -48°C, and to increase the separation efficiency of the capture separation membrane, cold heat may be recovered through the heat exchanger network.

Accordingly, the heat exchanger network may further include a recovery heat exchanger 407 to recover cold heat in the residual carbon dioxide gas 21. When the residual carbon dioxide gas 21 is fed into the recovery heat exchanger 407, gas 55 heated by the recovery heat exchanger, having a temperature rise, is obtained, and the gas 55 heated by the recovery heat exchanger is also at low temperature of about -25 to -10°C, and thus may cool down the capture separation membrane feed gas by additional heat exchange with the capture separation membrane feed gas through the heat exchanger network.

The residual carbon dioxide gas 21 is a carbon dioxide dominated gas, and to recover carbon dioxide, may be circulated to any one of the first capture separation membrane 102, the second capture separation membrane 106, the third capture separation membrane 118 and the second compressor 110, preferably the first capture separation membrane 102 or the second capture separation membrane 106, and most preferably the first capture separation membrane 102.

Preferably, when the residual carbon dioxide gas 21 is circulated to the first capture separation membrane 102, the second capture separation membrane 106 or the third capture separation membrane 118, it is effective in performing the low temperature separation process of the capture separation membrane, and circulating the residual carbon dioxide gas 21 to the first capture separation membrane 102 is most preferred since it may be possible to remarkably improve the separation efficiency of the separation membrane.

When the residual carbon dioxide gas 21 is recovered through the first capture separation membrane 102, the second capture separation membrane 106 or the third capture separation membrane 118, feeding into the capture separation membrane without cold heat recovery is more effective in lowering the temperature of the capture separation membrane feed gas than cold heat recovery through the heat exchanger network, so it is preferable not to recover cold heat.

Carbon dioxide is recovered through the separation membrane process and the separation tower process as described above, but high purity carbon dioxide recovery is challenging. To address the challenge, the present disclosure further includes the first recovery separation membrane 115 to recover high purity carbon dioxide from the carbon dioxide containing gas 19 obtained in the upper part through the separation tower 113, thereby achieving high purity carbon dioxide gas recovery, and reduces the flow rate of the recovered stream to improve the process efficiency.

The first recovery separation membrane 115 separates the carbon dioxide containing gas 19 into the first recovery separation membrane permeate gas 22 having higher carbon dioxide concentration and the first recovery separation membrane residual gas 23 having lower carbon dioxide concentration, and circulates the first recovery separation membrane permeate gas 22 to any one of the first capture separation membrane 102, the second capture separation membrane 106, the third capture separation membrane 118 or the second compressor 110, preferably the first capture separation membrane 102 or the second capture separation membrane 106, and most preferably the first capture separation membrane 102.

The present disclosure is characterized by feeding the carbon dioxide containing gas 19 obtained in the upper part of the separation tower 113 after the carbon dioxide liquefaction process of the separation tower 113 into the first recovery separation membrane 115 while keeping the carbon dioxide containing gas 19 in low temperature state, thereby improving the carbon dioxide selectivity without an additional compression or cooling process for increasing the separation efficiency, resulting in a significant improvement in separation efficiency. In particular, the carbon dioxide containing gas 19 is at low temperature of -40 to 0°C, and its temperature does not go beyond the temperature range in which the carbon dioxide separation efficiency is enhanced even after cold heat recovery, and thus the carbon dioxide containing gas 19 may be fed into the first recovery separation membrane 115 after heat exchange with the capture separation membrane feed gas through the heat exchanger network before it is fed into the first recovery separation membrane 115.

The temperature of the gas fed into the first recovery separation membrane 115 may be -40 to 0°C.

At least one of the first recovery separation membrane permeate gas 22 or the first recovery separation membrane residual gas 23 may be fed into the heat exchanger network while it is kept in low temperature state cooled through the liquefaction heat exchanger 112, and undergo heat exchange with the capture separation membrane feed gas.

The first recovery separation membrane permeate gas 22 may be mixed with the feed gas of any one of the first capture separation membrane 102, the second capture separation membrane 106, the third capture separation membrane 118 and the second compressor 110, preferably the first capture separation membrane 102, the second capture separation membrane 106 or the third capture separation membrane 118, and more preferably the first capture separation membrane 102 and then circulated. Through this, it may be possible to increase the amount of recovered carbon dioxide and increase the fraction of carbon dioxide in the process gas, thereby improving the process efficiency.

Preferably, when the first recovery separation membrane permeate gas 22 is circulated to the first capture separation membrane 102, the second capture separation membrane 106 or the third capture separation membrane 118, it is effective in performing the low temperature separation process of the capture separation membrane, and circulating to the first capture separation membrane 102 is most preferred since it may be possible to remarkably improve the separation efficiency of the separation membrane.

As described above, the residual carbon dioxide gas 21 is also a low temperature stream, and to recover carbon dioxide, it is circulating, and thus the residual carbon dioxide gas 21 and the first recovery separation membrane permeate gas 22 may be mixed and then circulated to any one of the first capture separation membrane 102, the second capture separation membrane 106, the third capture separation membrane 118 or the second compressor 110, preferably the first capture separation membrane 102, the second capture separation membrane 106 or the third capture separation membrane 118, more preferably the first capture separation membrane 102 or the second capture separation membrane 106, and most preferably the first capture separation membrane 102.

Additionally, when the residual carbon dioxide gas 21 and the first recovery separation membrane permeate gas 22 are circulated to the first capture separation membrane 102, the second capture separation membrane 106 or the third capture separation membrane 118, feeding into the capture separation membrane without cold heat recovery is more effective in lowering the temperature than cold heat recovery through the heat exchanger network, so it is preferable not to recover cold heat.

The first recovery separation membrane residual gas 23 is discharged as nitrogen dominated gas that is deficient in carbon dioxide, and may be discharged after heat exchange through the heat exchanger network before it is discharged. Additionally, the first capture separation membrane residual gas 6, the #1-1 capture separation membrane residual gas 8 and the #2-1 capture separation membrane residual gas 14 are nitrogen dominated gases, and low temperature streams among them may be mixed together, undergo heat exchange through the heat exchanger network and then discharged.

The present disclosure may further include a second recovery separation membrane 117 to separate the first recovery separation membrane residual gas 23 into the second recovery separation membrane permeate gas 24 having higher carbon dioxide concentration and the second recovery separation membrane residual gas 25 having lower carbon dioxide concentration, and in this instance, the second recovery separation membrane permeate gas 24 may be circulated to the first capture separation membrane 102, the second capture separation membrane 106, the third capture separation membrane 118 or the second compressor 110.

The second recovery separation membrane permeate gas 24 and the second recovery separation membrane residual gas 25 may cool down the capture separation membrane feed gas by heat exchange with the capture separation membrane feed gas through the heat exchanger network while they are kept in low temperature state cooled through the liquefaction heat exchanger 112.

The second recovery separation membrane 117 may circulate the second recovery separation membrane permeate gas 24 that is rich in carbon dioxide in the first recovery separation membrane residual gas 23 to improve the carbon dioxide recovery.

The second recovery separation membrane residual gas 25 may be discharged together with the low temperature gases that are discharged.

The first recovery separation membrane 115 and the second recovery separation membrane 117 may be made of the same or different materials, and may be made of at least one of polysulfone (PSF) or polyimide (PI).

The following Tables 1 and 2 show the selectivity of the separation membrane made of polysulfone (PSF) or polyimide (PI) as a function of temperature, and referring to Tables 1 and 2, it can be seen that the separation membrane made of polysulfone (PSF) or polyimide (PI) has a great increase in carbon dioxide selectivity at low temperature. In contrast, the separation membrane made of other material such as polyamide or polyether has an insignificant improvement in carbon dioxide selectivity at low temperature and thus is not suitable for the low temperature process.

**[Table 1]**

| Classification | PSF | | |
|---|---|---|---|
| Temperature | CO₂/N₂ | CO₂/O₂ | O₂/N₂ |
| -20°C | 75.9 | 10.5 | 7.3 |
| -10°C | 57.9 | 9.1 | 6.4 |
| 0°C | 43.2 | 7.2 | 6.0 |
| 10°C | 34.5 | 6.1 | 5.6 |
| 20°C | 31.0 | 5.7 | 5.4 |

**[Table 2]**

| Classification | PI | | |
|---|---|---|---|
| Temperature | CO₂/N₂ | CO₂/O₂ | O₂/N₂ |
| -20°C | 69.9 | 9.9 | 7.1 |
| -10°C | 55.2 | 9.6 | 5.8 |
| 0°C | 39.4 | 8.2 | 4.8 |
| 10°C | 31.9 | 7.3 | 4.4 |
| 20°C | 29.9 | 7.5 | 4.0 |

That is, as the first recovery separation membrane 115 and the second recovery separation membrane 117 are supplied with the gas cooled by the liquefaction heat exchanger 112 and perform the separation process at low temperature, at least one of polysulfone (PSF) or polyimide (PI) is preferred since the carbon dioxide separation efficiency remarkably increases when it works at low temperature in view of polysulfone (PSF) and polyimide (PI) separation membrane material characteristics.

Hereinafter, the heat exchanger network will be described in more detail.

In case where the present disclosure does not include the second capture separation membrane 106, the heat exchanger network may be the first heat exchanger network 200 that cools down the gas 3 compressed by the first compressor fed into the first capture separation membrane 102.

Below is the description that the second capture separation membrane 106 is not included, and the heat exchanger network is the first heat exchanger network 200.

The first heat exchanger network 200 may cool down the gas 3 compressed by the first compressor by heat exchange with at least one of the first capture separation membrane permeate gas 5, the first capture separation membrane residual gas 6, the #1-1 capture separation membrane permeate gas 7, the #1-1 capture separation membrane residual gas 8, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

When the present disclosure includes the first heat exchanger network 200, the first capture separation membrane permeate gas 5 may be fed into the second compressor 110 after heat exchange with the gas 3 compressed by the first compressor through the first heat exchanger network 200 while it is kept in low temperature state cooled through the first heat exchanger network 200.

When the present disclosure includes the first heat exchanger network 200, in case where the first capture separation membrane residual gas 6 is discharged while it is kept in low temperature state cooled through the first heat exchanger network 200, the first capture separation membrane residual gas 6 may be discharged after heat exchange with the gas 3 compressed by the first compressor through the first heat exchanger network 200.

In case where the first capture separation membrane residual gas 6 is fed into the #1-1 capture separation membrane 104, when cold heat is recovered through the first heat exchanger network 200, the separation process through the #1-1 capture separation membrane 104 is not performed at low temperature, so it is preferable to directly feed the first capture separation membrane residual gas 6 into the #1-1 capture separation membrane 104 without cold heat recovery.

When the apparatus for capturing carbon dioxide in flue gas of the present disclosure further includes the second capture separation membrane 106, the heat exchanger network may be at least one of the first heat exchanger network 200 that cools down the gas 3 compressed by the first compressor fed into the first capture separation membrane 102 or the second heat exchanger network 300, 400 that cools down the first capture separation membrane permeate gas 5 fed into the second capture separation membrane 106.

Below is the description that the second capture separation membrane 106 is included, and the heat exchanger network is the first heat exchanger network 200.

The first heat exchanger network 200 may cool down the gas 3 compressed by the first compressor by heat exchange with at least one of the first capture separation membrane permeate gas 5, the first capture separation membrane residual gas 6, the #1-1 capture separation membrane permeate gas 7, the #1-1 capture separation membrane residual gas 8, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

The first capture separation membrane permeate gas 5 may be fed into the second capture separation membrane 106 after heat exchange with the gas 3 compressed by the first compressor through the first heat exchanger network 200 while it is kept in low temperature state cooled through the first heat exchanger network 200.

The first capture separation membrane residual gas 6 may be discharged after heat exchange with the gas 3 compressed by the first compressor through the first heat exchanger network 200 while it is kept in low temperature state cooled through the first heat exchanger network 200. However, in case where the first capture separation membrane residual gas 6 is fed into the #1-1 capture separation membrane 104, the first capture separation membrane residual gas 6 may be directly fed into the #1-1 capture separation membrane 104 without being fed into the first heat exchanger network 200.

In general, the first capture separation membrane permeate gas 5 is fed into the second capture separation membrane 106 via the vacuum pump to increase the pressure ratio in order to increase the separation efficiency. The first capture separation membrane permeate gas 5 having passed through the vacuum pump has a temperature rise, and is not in the low temperature state. Accordingly, in case where the second heat exchanger network 300 is not included, all the gas streams having passed through the second capture separation membrane 106 and the #2-1 capture separation membrane 108 are not in the low temperature state, so it is preferable not to feed them into the heat exchanger network.

Below is the description that the second capture separation membrane 106 is included, and the heat exchanger network is the second heat exchanger network 400. In case where the present disclosure further includes the second capture separation membrane 106, the heat exchanger network including the second heat exchanger network 400 is more desirable than including only the first heat exchanger network 200 in terms of process energy savings.

The second heat exchanger network 400 may cool down the first capture separation membrane permeate gas 5 by heat exchange with at least one of the second capture separation membrane permeate gas 10, the second capture separation membrane residual gas 12, the #2-1 capture separation membrane permeate gas 13, the #2-1 capture separation membrane residual gas 14, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

Preferably, the second heat exchanger network 400 may cool down the first capture separation membrane permeate gas 5 by heat exchange with all the second capture separation membrane permeate gas 10, the #2-1 capture separation membrane permeate gas 13, the #2-1 capture separation membrane residual gas 14, the carbon dioxide containing gas 19, the first recovery separation membrane permeate gas 22 and the first recovery separation membrane residual gas 23, and more preferably, the second heat exchanger network 400 may facilitate additional heat exchange between the first capture separation membrane permeate gas 5 and the residual carbon dioxide gas 21.

More preferably, the second heat exchanger network 400 may include a #2-2 heat exchanger 402 to exchange heat between the first capture separation membrane permeate gas 5 and the first recovery separation membrane permeate gas 22; a #2-3 heat exchanger 403 to exchange heat between the first capture separation membrane permeate gas 42 cooled by the #2-2 heat exchanger and the #2-1 capture separation membrane permeate gas 13; a #2-4 heat exchanger 404 to exchange heat between the first capture separation membrane permeate gas 43 cooled by the #2-3 heat exchange and at least one of the #2-1 capture separation membrane residual gas 14 or the first recovery separation membrane residual gas 23; a #2-5 heat exchanger 405 to exchange heat between the first capture separation membrane permeate gas 44 cooled by the #2-4 heat exchanger and the second capture separation membrane permeate gas 10; and a #2-6 heat exchanger 406 to exchange heat between the first capture separation membrane permeate gas 45 cooled by the #2-5 heat exchanger and the carbon dioxide containing gas 19.

Even more preferably, the second heat exchanger network 400 may include a #2-1 heat exchanger 401 to exchange heat between the first capture separation membrane permeate gas 5 and the residual carbon dioxide gas 21; the #2-2 heat exchanger 402 to exchange heat between the first capture separation membrane permeate gas 41 cooled by the #2-1 heat exchanger and the first recovery separation membrane permeate gas 22; the #2-3 heat exchanger 403 to exchange heat between the first capture separation membrane permeate gas 42 cooled by the #2-2 heat exchanger and the #2-1 capture separation membrane permeate gas 13; the #2-4 heat exchanger 404 to exchange heat between the first capture separation membrane permeate gas 43 cooled by the #2-3 heat exchanger and at least one of the #2-1 capture separation membrane residual gas 14 or the first recovery separation membrane residual gas 23; the #2-5 heat exchanger 405 to exchange heat between the first capture separation membrane permeate gas 44 cooled by the #2-4 heat exchanger and the second capture separation membrane permeate gas 10; and the #2-6 heat exchanger 406 to exchange heat between the first capture separation membrane permeate gas 45 cooled by the #2-5 heat exchanger and the carbon dioxide containing gas 19, and most preferably, may further include the recovery heat exchanger 407 to exchange heat between the first capture separation membrane permeate gas 46 cooled by the #2-6 heat exchanger and the residual carbon dioxide gas 21, and the residual carbon dioxide gas 21 fed into the #2-1 heat exchanger 401 may be the gas 55 heated by the recovery heat exchanger. In particular, it was confirmed that when the heat exchanger network includes the #2-1 to #2-6 heat exchangers and the recovery heat exchanger 407, it was possible to remarkably reduce energy necessary to cool the first capture separation membrane permeate gas 5 down to the target.

The second capture separation membrane permeate gas 10 may be fed into the second compressor 110 or the third capture separation membrane 118 after cold heat recovery through the second heat exchanger network 400 while it is kept in low temperature state cooled through the second heat exchanger network 400.

In case where the second capture separation membrane residual gas 12 is discharged while it is kept in low temperature state cooled through the second heat exchanger network 400, the second capture separation membrane residual gas 12 may be discharged after cold heat recovery through the second heat exchanger network 400. However, in case where the second capture separation membrane residual gas 12 is fed into the #2-1 capture separation membrane 108, it is preferable not to recover cold heat.

When the present disclosure further includes the #2-1 capture separation membrane 108, the #2-1 capture separation membrane permeate gas 13 and the #2-1 capture separation membrane residual gas 14 are kept in low temperature state, and it may be possible to increase the carbon dioxide separation efficiency by heat exchange between at least one of the #2-1 capture separation membrane permeate gas 13 or the #2-1 capture separation membrane residual gas 14 and the first capture separation membrane permeate gas 5 through the second heat exchanger network 400.

Below is the description that the second capture separation membrane 106 is included, and the heat exchanger network includes both the first heat exchanger network 200 and the second heat exchanger network 300.

The first heat exchanger network 200 may cool down the gas 3 compressed by the first compressor by heat exchange with at least one of the first capture separation membrane permeate gas 5, the first capture separation membrane residual gas 6, the #1-1 capture separation membrane permeate gas 7, the #1-1 capture separation membrane residual gas 8, the second capture separation membrane permeate gas 10, the second capture separation membrane residual gas 12, the #2-1 capture separation membrane permeate gas 13, the #2-1 capture separation membrane residual gas 14, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

The second heat exchanger network 300 may cool down the first capture separation membrane permeate gas 5 by heat exchange with at least one of the first capture separation membrane residual gas 6, the #1-1 capture separation membrane permeate gas 7, the #1-1 capture separation membrane residual gas 8, the second capture separation membrane permeate gas 10, the second capture separation membrane residual gas 12, the #2-1 capture separation membrane permeate gas 13, the #2-1 capture separation membrane residual gas 14, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

Preferably, the first heat exchanger network 200 may cool down the gas 3 compressed by the first compressor by heat exchange with at least one of the first capture separation membrane permeate gas 5, the first capture separation membrane residual gas 6, the #2-1 capture separation membrane permeate gas 13, the #2-1 capture separation membrane residual gas 14 or the first recovery separation membrane residual gas 23, and the second heat exchanger network 300 may cool down the first capture separation membrane permeate gas 5 by heat exchange with at least one of the first capture separation membrane residual gas 6, the second capture separation membrane permeate gas 10, the #2-1 capture separation membrane residual gas 14 or the first recovery separation membrane residual gas 23.

Most preferably, the first heat exchanger network 200 may include a #1-1 heat exchanger 201 to exchange heat between the gas 3 compressed by the first compressor and the #2-1 capture separation membrane permeate gas 13; a #1-2 heat exchanger 202 to exchange heat between the gas 31 compressed by the first compressor and cooled by the #1-1 heat exchanger and the first capture separation membrane permeate gas 5; and a #1-3 heat exchanger to exchange heat between the gas 32 compressed by the first compressor and cooled by the #1-2 heat exchanger and nitrogen dominated gas 35 including at least one of the first capture separation membrane residual gas 6, the #2-1 capture separation membrane residual gas 14 or the first recovery separation membrane residual gas 23, and the second heat exchanger network 300 may include a #2-1 heat exchanger 301 to exchange heat between the first capture separation membrane permeate gas 5 and the second capture separation membrane permeate gas 10; and a #2-2 heat exchanger 302 to exchange heat between the first capture separation membrane permeate gas 61 cooled by the #2-1 heat exchanger and the gas 38 heated by the #1-3 heat exchanger. In particular, it was confirmed that when the heat exchanger network includes the first heat exchanger network 200 including the #1-1 and #1-2 heat exchangers and the second heat exchanger network 300 including the #2-1 and #2-2 heat exchangers, it was possible to cool down to the temperature for minimizing necessary energy and maximizing the carbon dioxide separation efficiency without additional energy consumption.

The first capture separation membrane permeate gas 5 may undergo cold heat recovery through the heat exchanger network while it is kept in low temperature state cooled through the first heat exchanger network 200.

The first capture separation membrane residual gas 6 may be fed into the heat exchanger network while it is kept in low temperature state cooled through the first heat exchanger network 200, undergo cold heat recovery and then discharged. However, in case where the first capture separation membrane residual gas 6 is fed into the #1-1 capture separation membrane 104, it is preferred that the first capture separation membrane residual gas 6 is directly fed into the #1-1 capture separation membrane 104 without being feding into the heat exchanger network.

The second capture separation membrane permeate gas 10 cooled through the heat exchanger network may be fed into the heat exchanger network, undergo cold heat recovery and then fed into the second compressor 110.

In case where the second capture separation membrane residual gas 12 is discharged, the second capture separation membrane residual gas 12 may be discharged after cold heat recovery through the heat exchanger network before it is discharged.

In case where the second capture separation membrane residual gas 12 is fed into the #2-1 capture separation membrane 108, it is preferable not to recover cold heat in the second capture separation membrane residual gas 12.

In case where the present disclosure further includes the #2-1 capture separation membrane 108, the #2-1 capture separation membrane permeate gas 13 and the #2-1 capture separation membrane residual gas 14 are kept in low temperature state, and it may be possible to increase the carbon dioxide separation efficiency by heat exchange between at least one of the #2-1 capture separation membrane permeate gas 13 or the #2-1 capture separation membrane residual gas 14 and the capture separation membrane feed gas through the first heat exchanger network 200 or the second heat exchanger network 300.

When the apparatus for capturing carbon dioxide in flue gas of the present disclosure further includes the third capture separation membrane 118, the heat exchanger network may be at least one of the first heat exchanger network 200 that cools down the gas 3 compressed by the first compressor fed into the first capture separation membrane 102, the second heat exchanger network 300, 400 that cools down the first capture separation membrane permeate gas 5 fed into the second capture separation membrane 106 or the third heat exchanger network that cools down the second capture separation membrane permeate gas 10 by heat exchange with the low temperature streams in the process. In this instance, an additional separation membrane may be installed at the third capture separation membrane 118 remaining part to improve the carbon dioxide recovery.

Meanwhile, the first heat exchanger network 200 may further include a first cooling heat exchanger 204 to additionally cool down the gas 3 compressed by the first compressor by heat exchange with the refrigerant, thereby cooling the gas fed into the first capture separation membrane 102 down to the temperature at which the carbon dioxide separation efficiency is maximized.

Additionally, the second heat exchanger network 300, 400 may further include a second cooling heat exchanger 303, 408 to additionally cool down the first capture separation membrane permeate gas 5 by heat exchange with the refrigerant, thereby cooling the gas fed into the second capture separation membrane 106 down to the temperature at which the carbon dioxide separation efficiency is maximized.

In this instance, the first cooling heat exchanger 204 or the second cooling heat exchangers 303, 408 may use some of the increased capacity by increasing the cooling capacity of the liquefaction heat exchanger 112, and compared to the increased carbon dioxide separation efficiency of the capture separation membrane, very low energy consumption is used to increase the capacity of the liquefaction heat exchanger 112.

Since the nitrogen dominated gas including at least one of the first capture separation membrane residual gas 6, the #2-1 capture separation membrane residual gas 14 or the first recovery separation membrane residual gas 23 has sufficiently low temperature even after it is heated by the heat exchanger network, the present disclosure may further include an additional heat exchanger 111 to cool down the gas 15 compressed by the second compressor by heat exchange between nitrogen dominated gas 64 heated by the #1-3 heat exchanger 203 and the #2-2 heat exchanger 302 and the gas 15 compressed by the second compressor, thereby reducing energy necessary for cooling in the liquefaction heat exchanger 112.

When the present disclosure further includes the additional heat exchanger 111, the liquefaction heat exchanger 112 may cool down the gas 16 compressed by the second compressor and cooled by the additional heat exchanger.

The first capture separation membrane 102, the #1-1 capture separation membrane 104, the second capture separation membrane 106, the third capture separation membrane 118 and the #2-1 capture separation membrane 108 may be made of the same or different materials, and may be made of at least one of polysulfone (PSF) or polyimide (PI).

As described above, it is preferred since the carbon dioxide separation efficiency remarkably increases at low temperature in view of polysulfone (PSF) and polyimide (PI) separation membrane material characteristics.

In particular, in case where the apparatus for capturing carbon dioxide in flue gas of the present disclosure includes the first heat exchanger network 200, the gas fed into the first capture separation membrane 102 and the #1-1 capture separation membrane 104 is in low temperature state, and in case where the apparatus includes the second heat exchanger network 300, 400, the gas fed into the second capture separation membrane 106 and the #2-1 capture separation membrane 108 is in low temperature state, and in case where the apparatus includes the third heat exchanger network, the gas fed into the third capture separation membrane 118 is in low temperature state. Accordingly, it is more preferred that the capture separation membrane is made of at least one of polysulfone (PSF) or polyimide (PI) since it is possible to remarkably improve the carbon dioxide separation efficiency.

More specifically, when the apparatus for capturing carbon dioxide in flue gas of the present disclosure includes the first heat exchanger network 200, the temperature of the gas fed into the first capture separation membrane 102 and the #1-1 capture separation membrane 104 may be -40 to 10°C, and most preferably -25 to -15°C, and when the apparatus includes the second heat exchanger network 300, 400, the temperature of the gas fed into the second capture separation membrane 106 and the #2-1 capture separation membrane 108 may be -40 to 0°C, and most preferably -25 to -15°C.

Another aspect of the present disclosure provides a process of capturing carbon dioxide in flue gas, including: a first compression step of compressing, by the first compressor 101, the first compressor feed gas 2 including the flue gas 1; a first capture step of feeding the first capture separation membrane feed gas 4 including the gas 3 compressed by the first compressor into the first capture separation membrane 102 to separate into the first capture separation membrane permeate gas 5 and the first capture separation membrane residual gas 6; a second compression step of compressing, by the second compressor 110, the second compressor feed gas 11 including the first capture separation membrane permeate gas 5; a liquefaction step of cooling down, by the liquefaction heat exchanger 112, the gas 15 compressed by the second compressor; a separation and purification step of feeding the gas 17 cooled by the liquefaction heat exchanger into the separation tower to separate into the high purity carbon dioxide liquid 18 and the carbon dioxide containing gas 19; and a first recovery step of feeding the carbon dioxide containing gas 19 into the first recovery separation membrane 115 to circulate the first recovery separation membrane permeate gas 22 passing through the first recovery separation membrane 115 to the first compressor 101, the first capture separation membrane 102 or the second compressor 110.

The present disclosure may further include a second capture step of feeding the second capture separation membrane feed gas 9 including the first capture separation membrane permeate gas 5 into the second capture separation membrane 106 to separate into the second capture separation membrane permeate gas 10 and the second capture separation membrane residual gas 12, and in this instance, the second compression step facilitates, by the second compressor 110, compression of only the second capture separation membrane permeate gas 10 in the first capture separation membrane permeate gas 5.

The present disclosure may further include a dry ice production step of converting the high purity carbon dioxide liquid 18 to the dry ice 20 and obtaining the residual carbon dioxide gas 21 not having been converted to the dry ice 20.

Before feeding at least one capture separation membrane feed gas of the gas 3 compressed by the first compressor or the first capture separation membrane permeate gas 5 into the separation membrane, the present disclosure may further include a heat exchange step of cooling down by heat exchange with at least one of the first capture separation membrane permeate gas 5, the first capture separation membrane residual gas 6, the second capture separation membrane permeate gas 10, the second capture separation membrane residual gas 12, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

According to an embodiment of the present disclosure, before feeding the gas 3 compressed by the first compressor into the first capture separation membrane 102, the present disclosure may further include the heat exchange step of facilitating, by the heat exchanger network, heat exchange with at least one of the first capture separation membrane permeate gas 5, the first capture separation membrane residual gas 6, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

The first compression step may facilitate, by the first compressor 101, compression of the first compressor feed gas 2 to realize the pressure ratio for the separation process of the first capture separation membrane 102, and more specifically, may facilitate compression of the first compressor feed gas 2 to the pressure of 2 to 5 bar, and preferably 2.2 to 3.5 bar.

In case where the present disclosure further includes the heat exchange step, the first compressor 101 may compress the feed gas stream to the pressure of 1.1 to 3.5 bar, and preferably 1.2 to 2.0 bar.

The first compressor feed gas 2 is a gas including the flue gas 1, and may be a mixed gas of the flue gas 1 and at least one of the #1-1 capture separation membrane permeate gas 7, the second capture separation membrane residual gas 12, the #2-1 capture separation membrane permeate gas 13 or the first recovery separation membrane permeate gas 22, preferably a mixed gas of the flue gas 1 and at least one of the #1-1 capture separation membrane permeate gas 7, the second capture separation membrane residual gas 12 or the #2-1 capture separation membrane permeate gas 13, and more preferably a mixed gas of the flue gas 1 and the #2-1 capture separation membrane permeate gas 13.

The first capture step is the step of feeding the first capture separation membrane feed gas 4 into the first capture separation membrane 102 to separate into the first capture separation membrane permeate gas 5 that is relatively rich in carbon dioxide and the first capture separation membrane residual gas 6 that is relatively deficient in carbon dioxide.

The first capture separation membrane feed gas 4 may be the gas 3 compressed by the first compressor or a mixed gas of the gas 3 compressed by the first compressor and at least one of the residual carbon dioxide gas 21 or the first recovery separation membrane permeate gas 22, and preferably, may be a mixed gas of the gas 3 compressed by the first compressor, the residual carbon dioxide gas 21 and the first recovery separation membrane permeate gas 22.

In case where the process of capturing carbon dioxide in flue gas of the present disclosure further includes the second capture step, the first capture separation membrane permeate gas 5 is fed into the second capture separation membrane 106, and in case where the process does not include the second capture step, the first capture separation membrane permeate gas 5 is fed into the second compressor 110.

The first capture separation membrane residual gas 6 may be discharged or fed into the #1-1 capture separation membrane 104.

The present disclosure may further include a #1-1 capture step of feeding the first capture separation membrane residual gas 6 into the #1-1 capture separation membrane 104 to separate into the #1-1 capture separation membrane permeate gas 7 that is relatively rich in carbon dioxide and the #1-1 capture separation membrane residual gas 8 that is relatively deficient in carbon dioxide, and circulating the #1-1 capture separation membrane permeate gas 7 to the first compressor 101 in order to recover the residual carbon dioxide in the first capture separation membrane residual gas 6.

The second capture step is the step of feeding the second capture separation membrane feed gas 9 including the first capture separation membrane permeate gas 5 into the second capture separation membrane 106 to separate into the second capture separation membrane permeate gas 10 having higher carbon dioxide concentration than the first capture separation membrane permeate gas 5 and the second capture separation membrane residual gas 12 that is deficient in carbon dioxide.

The second capture separation membrane feed gas 9 may be the first capture separation membrane permeate gas 5 or a mixed gas of the first capture separation membrane permeate gas 5 and at least one of the residual carbon dioxide gas 21, the first recovery separation membrane permeate gas 22, the second recovery separation membrane permeate gas 24 or the third capture separation membrane permeate gas 28.

In case where the process of capturing carbon dioxide in flue gas of the present disclosure further includes a third capture step, the second capture separation membrane permeate gas 10 may be fed into the third capture separation membrane 118, and in case where the process does not include the third capture step, the second capture separation membrane permeate gas 10 may be fed into the second compressor 110.

The second capture separation membrane residual gas 12 may be discharged, or fed into the first compressor 101 or the #2-1 capture separation membrane 108.

The #2-1 capture step is the step of feeding the second capture separation membrane residual gas 12 into the #2-1 capture separation membrane 108 to separate into the #2-1 capture separation membrane permeate gas 13 having higher carbon dioxide concentration and the #2-1 capture separation membrane residual gas 14 having lower carbon dioxide concentration.

The #2-1 capture separation membrane permeate gas 13 may be circulated to the first compressor 101, thereby improving the carbon dioxide recovery.

The #2-1 capture separation membrane residual gas 14 is discharged as gas in which carbon dioxide is deficient and nitrogen is dominant, and the first capture separation membrane residual gas 6, the #1-1 capture separation membrane residual gas 8 and the first recovery separation membrane residual gas 23 are also nitrogen dominated gases. Accordingly, it may be mixed with low temperature gases among the nitrogen dominated gases, undergo cold heat recovery through the heat exchange step and then discharged.

The process of capturing carbon dioxide in flue gas of the present disclosure may further include the third capture step of feeding the second capture separation membrane permeate gas 10 into the third capture separation membrane 118 to separate into the third capture separation membrane permeate gas 27 and the third capture separation membrane residual gas 28 according to the carbon dioxide concentration. In this instance, only the third capture separation membrane permeate gas 27 in the second capture separation membrane permeate gas 10 is fed into the second compressor 110.

The second compression step is the step of compressing, by the second compressor 110, the second compressor feed gas 11 to the required pressure for the liquefaction process, preferably 22 to 50 bar, preferably 22 to 31 bar.

The second compressor feed gas 11 may include the first capture separation membrane permeate gas 5, the second capture separation membrane permeate gas 10 or the third capture separation membrane permeate gas 27.

The liquefaction step is the step of cooling, by the liquefaction heat exchanger 112, the gas 15 compressed by the second compressor down to the suitable temperature for separation and purification and carbon dioxide liquefaction in the separation tower 113, preferably -35 to -18°C.

The separation and purification step is the step of feeding the gas 17 cooled by the liquefaction heat exchanger into the separation tower 113 to obtain the high purity carbon dioxide liquid 18 in the lower part and the carbon dioxide containing gas 19 in the upper part by separation and purification.

The carbon dioxide containing gas 19 may cool down the capture separation membrane feed gas by heat exchange with the capture separation membrane feed gas in the heat exchange step before it is fed into the first recovery separation membrane 115.

The dry ice production step facilitates conversion of the high purity carbon dioxide liquid 18 to the dry ice 20.

The high purity carbon dioxide liquid 18 is not completely converted to the dry ice 20, obtaining the residual carbon dioxide gas 21.

The residual carbon dioxide gas 21 is a carbon dioxide dominated gas, and to recover carbon dioxide, may be circulated to any one of the first capture separation membrane 102, the second capture separation membrane 106, the third capture separation membrane 118 and the second compressor 110, preferably the first capture separation membrane 102 or the second capture separation membrane 106, and most preferably the first capture separation membrane 102.

In case where the residual carbon dioxide gas 21 is recovered through the first capture separation membrane 102, the second capture separation membrane 106 or the third capture separation membrane 118, it is preferred that the residual carbon dioxide gas 21 is fed into the capture separation membrane without cold heat recovery through the heat exchanger network since the temperature lowering effect is greater.

The temperature of the residual carbon dioxide gas 21 is very low temperature of about -78 to -48°C. Accordingly, to recover cold heat in the residual carbon dioxide gas 21, the present disclosure may further include a recovery heat exchange step of recovering, by the recovery heat exchanger 407, cold heat in the residual carbon dioxide gas 21 by heat exchange between the capture separation membrane feed gas and the residual carbon dioxide gas 21.

The gas 55 heated by the recovery heat exchanger is obtained through the recovery heat exchange step, and the gas 55 heated by the recovery heat exchanger is at low temperature of about -25 to -10°C, and thus may cool down the capture separation membrane feed gas by additional heat exchange with the capture separation membrane feed gas in the heat exchange step.

The present disclosure includes the first recovery step of feeding the carbon dioxide containing gas 19 into the first recovery separation membrane 115 to separate into the first recovery separation membrane permeate gas 22 having higher carbon dioxide concentration passing through the first recovery separation membrane 115 and the first recovery separation membrane residual gas 23 having lower carbon dioxide concentration remaining in the first recovery separation membrane 115, thereby recovering high purity carbon dioxide gas through carbon dioxide recovery from the carbon dioxide containing gas 19 and remarkably reducing carbon dioxide emission.

In particular, the carbon dioxide containing gas 19 is at low temperature of -40 to 0°C, and its temperature does not go beyond the temperature range in which the carbon dioxide separation efficiency is enhanced even after cold heat recovery, and thus may be fed into the first recovery separation membrane 115 after cold heat recovery by heat exchange with the capture separation membrane feed gas in the heat exchange step before it is fed into the first recovery separation membrane 115.

In the first recovery step, the temperature of the gas fed into the first recovery separation membrane 115 may be -40 to 0°C.

The first recovery separation membrane permeate gas 22 and the first recovery separation membrane residual gas 23 are kept in low temperature state cooled in the liquefaction step, and at least one of them may undergo heat exchange with the capture separation membrane feed gas in the heat exchange step.

The first recovery separation membrane permeate gas 22 may be circulated to any one of the first capture separation membrane 102, the second capture separation membrane 106, the third capture separation membrane 118 and the second compressor 110, preferably the first capture separation membrane 102, the second capture separation membrane 106 or the third capture separation membrane 118, and most preferably the first capture separation membrane 102.

In case where the first recovery separation membrane permeate gas 22 is circulated to the first capture separation membrane 102, the second capture separation membrane 106 or the third capture separation membrane 118, it is preferable not to recover cold heat in the heat exchange step.

The first recovery separation membrane residual gas 23 is discharged as a nitrogen dominated gas that is deficient in carbon dioxide, and may be discharged after cold heat recovery in the heat exchange step before it is discharged. Additionally, as described above, the first recovery separation membrane residual gas 23 may be discharged after heat exchange with at least one of the first capture separation membrane residual gas 6, the #1-1 capture separation membrane residual gas 8 or the #2-1 capture separation membrane residual gas 14.

According to an embodiment of the present disclosure, the present disclosure may further include a second recovery step of feeding the first recovery separation membrane residual gas 23 into the second recovery separation membrane 117 to separate into the second recovery separation membrane permeate gas 24 having higher carbon dioxide concentration and the second recovery separation membrane residual gas 25 having lower carbon dioxide concentration, and circulating the second recovery separation membrane permeate gas 24 to the first capture separation membrane 102, the second capture separation membrane 106, the third capture separation membrane 118 or the second compressor 110.

At least one of the second recovery separation membrane permeate gas 24 or the second recovery separation membrane residual gas 25 may undergo heat exchange with the capture separation membrane feed gas.

The second recovery separation membrane residual gas 25 may be discharged.

Since the first recovery separation membrane 115 and the second recovery separation membrane 117 are supplied with the gas cooled by the liquefaction heat exchanger 112 and perform the separation process at low temperature, they are preferably made of at least one of polysulfone (PSF) or polyimide (PI) since the carbon dioxide separation efficiency remarkably increases at low temperature in view of polysulfone (PSF) and polyimide (PI) separation membrane material characteristics.

In case where the process of capturing carbon dioxide in flue gas of the present disclosure does not include the second capture step, the heat exchange step may facilitate, by the first heat exchanger network 200, cooling of the gas 3 compressed by the first compressor fed into the first capture separation membrane 102.

Below is the description that the second capture step is not included, and the heat exchange step facilitates, by the first heat exchanger network 200, cooling of the gas 3 compressed by the first compressor.

The heat exchange step may facilitate cooling of the gas 3 compressed by the first compressor by heat exchange with at least one of the first capture separation membrane permeate gas 5, the first capture separation membrane residual gas 6, the #1-1 capture separation membrane permeate gas 7, the #1-1 capture separation membrane residual gas 8, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

The first capture separation membrane permeate gas 5 may be fed into the second compressor 110 after heat exchange with the gas 3 compressed by the first compressor in the heat exchange step while it is kept in low temperature state cooled in the heat exchange step.

In case where the first capture separation membrane residual gas 6 is discharged while it is kept in low temperature state cooled in the heat exchange step, the first capture separation membrane residual gas 6 may be discharged after heat exchange with the gas 3 compressed by the first compressor in the heat exchange step.

In case where the first capture separation membrane residual gas 6 is fed into the #1-1 capture separation membrane 104, it is preferable to directly feed the first capture separation membrane residual gas 6 into the #1-1 capture separation membrane 104 without cold heat recovery in the heat exchange step.

When the process of capturing carbon dioxide in flue gas of the present disclosure further includes the second capture step, the heat exchange step may include at least one of the steps of cooling down, by the first heat exchanger network 200, the gas 3 compressed by the first compressor fed into the first capture separation membrane 102; and cooling down, by the second heat exchanger network 300, 400, the first capture separation membrane permeate gas 5 fed into the second capture separation membrane 106.

Below is the description that the second capture step is included, and the heat exchange step facilitates, by the first heat exchanger network 200, cooling of the gas 3 compressed by the first compressor.

The heat exchange step may facilitate, by the first heat exchanger network 200, cooling of the gas 3 compressed by the first compressor by heat exchange with at least one of the first capture separation membrane permeate gas 5, the first capture separation membrane residual gas 6, the #1-1 capture separation membrane permeate gas 7, the #1-1 capture separation membrane residual gas 8, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

The first capture separation membrane permeate gas 5 may be fed into the second capture separation membrane 106 after heat exchange with the gas 3 compressed by the first compressor in the heat exchange step while it is kept in low temperature state cooled in the heat exchange step.

The first capture separation membrane residual gas 6 may be discharged after cold heat recovery in the heat exchange step while it is kept in low temperature state cooled in the heat exchange step. However, in case where the first capture separation membrane residual gas 6 is fed into the #1-1 capture separation membrane 104, it is preferred that the first capture separation membrane residual gas 6 is directly fed into the #1-1 capture separation membrane 104 without cold heat recover in the heat exchange step.

In case where the present disclosure does not include the second heat exchanger network 300, all the gas streams having passed through the second capture separation membrane 106 and the #2-1 capture separation membrane 108 are not in the low temperature state, so it is preferable not to feed them into the heat exchanger network.

Below is the description that the second capture step is included, and the heat exchange step facilitates, by the second heat exchanger network 400, cooling of the first capture separation membrane permeate gas 5 fed into the second capture separation membrane 106.

The heat exchange step may facilitate, by the second heat exchanger network 400, cooling of the first capture separation membrane permeate gas 5 by heat exchange with at least one of the second capture separation membrane permeate gas 10, the second capture separation membrane residual gas 12, the #2-1 capture separation membrane permeate gas 13, the #2-1 capture separation membrane residual gas 14, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

Preferably, the heat exchange step may facilitate, by the second heat exchanger network 400, cooling of the first capture separation membrane permeate gas 5 by heat exchange with all the second capture separation membrane permeate gas 10, the #2-1 capture separation membrane permeate gas 13, the #2-1 capture separation membrane residual gas 14, the carbon dioxide containing gas 19, the first recovery separation membrane permeate gas 22 and the first recovery separation membrane residual gas 23, and more preferably, the second heat exchanger network 400 may facilitate further heat exchange between the first capture separation membrane permeate gas 5 and the residual carbon dioxide gas 21.

More preferably, the heat exchange step may include the steps of exchanging, by the #2-2 heat exchanger 402, heat between the first capture separation membrane permeate gas 5 and the first recovery separation membrane permeate gas 22; exchanging, by the #2-3 heat exchanger 403, heat between the first capture separation membrane permeate gas 42 cooled by the #2-2 heat exchanger and the #2-1 capture separation membrane permeate gas 13; exchanging, by the #2-4 heat exchanger 404, heat between the first capture separation membrane permeate gas 43 cooled by the #2-3 heat exchanger and at least one of the #2-1 capture separation membrane residual gas 14 or the first recovery separation membrane residual gas 23; exchanging, by the #2-5 heat exchanger 405, heat between the first capture separation membrane permeate gas 44 cooled by the #2-4 heat exchanger and the second capture separation membrane permeate gas 10; and exchanging, by the #2-6 heat exchanger 406, heat between the first capture separation membrane permeate gas 45 cooled by the #2-5 heat exchanger and the carbon dioxide containing gas 19.

Even more preferably, the heat exchange step may include a first heat exchange step of exchanging, by the #2-1 heat exchanger 401, heat between the first capture separation membrane permeate gas 5 and the residual carbon dioxide gas 21; a second heat exchange step of exchanging, by the #2-2 heat exchanger 402, heat between the first capture separation membrane permeate gas 41 cooled by the #2-1 heat exchanger and the first recovery separation membrane permeate gas 22; a third heat exchange step of exchanging, by the #2-3 heat exchanger 403, heat between the first capture separation membrane permeate gas 42 cooled by the #2-2 heat exchanger and the #2-1 capture separation membrane permeate gas 13; a fourth heat exchange step of exchanging, by the #2-4 heat exchanger 404, heat between the first capture separation membrane permeate gas 43 cooled by the #2-3 heat exchanger and at least one of the #2-1 capture separation membrane residual gas 14 or the first recovery separation membrane residual gas 23; a fifth heat exchange step of exchanging, by the #2-5 heat exchanger 405, heat between the first capture separation membrane permeate gas 44 cooled by the #2-4 heat exchanger and the second capture separation membrane permeate gas 10; and a sixth heat exchange step of exchanging, by the #2-6 heat exchanger 406, heat between the first capture separation membrane permeate gas 45 cooled by the #2-5 heat exchanger and the carbon dioxide containing gas 19, and most preferably, may further include a recovery heat exchange step of exchanging, by the recovery heat exchanger 407, heat between the first capture separation membrane permeate gas 46 cooled by the #2-6 heat exchanger and the residual carbon dioxide gas 21, and the residual carbon dioxide gas 21 in the first heat exchange step may be the gas 55 heated by the recovery heat exchanger.

The second capture separation membrane permeate gas 10 may be fed into the second compressor 110 or the third capture separation membrane 118 after cooling down the capture separation membrane feed gas by heat exchange with the first capture separation membrane permeate gas 5 in the heat exchange step while it is kept in low temperature state cooled in the heat exchange step.

The second capture separation membrane residual gas 12 may undergo heat exchange with the capture separation membrane feed gas in the heat exchange step before it is discharged while it is kept in low temperature state cooled in the heat exchange step. However, in case where the second capture separation membrane residual gas 12 is fed into the #2-1 capture separation membrane 108, it is preferred that the second capture separation membrane residual gas 12 does not undergo heat exchange in the heat exchange step.

In case where the present disclosure further includes the #2-1 capture step, the #2-1 capture separation membrane permeate gas 13 and the #2-1 capture separation membrane residual gas 14 are kept in low temperature state, and at least one of them may undergo cold heat recovery through the second heat exchanger network 400 in the heat exchange step.

Below is the description that the second capture step is included, and the heat exchange step includes the steps of cooling down, by the first heat exchanger network 200, the gas 3 compressed by the first compressor; and cooling down, by the second heat exchanger network 300, the first capture separation membrane permeate gas 5.

The heat exchange step may include the steps of cooling down, by the first heat exchanger network 200, the gas 3 compressed by the first compressor by heat exchange with at least one of the first capture separation membrane permeate gas 5, the first capture separation membrane residual gas 6, the #1-1 capture separation membrane permeate gas 7, the #1-1 capture separation membrane residual gas 8, the second capture separation membrane permeate gas 10, the second capture separation membrane residual gas 12, the #2-1 capture separation membrane permeate gas 13, the #2-1 capture separation membrane residual gas 14, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25; and cooling down, by the second heat exchanger network 300, the first capture separation membrane permeate gas 5 by heat exchange with at least one of the first capture separation membrane residual gas 6, the #1-1 capture separation membrane permeate gas 7, the #1-1 capture separation membrane residual gas 8, the second capture separation membrane permeate gas 10, the second capture separation membrane residual gas 12, the #2-1 capture separation membrane permeate gas 13, the #2-1 capture separation membrane residual gas 14, the carbon dioxide containing gas 19, the residual carbon dioxide gas 21, the first recovery separation membrane permeate gas 22, the first recovery separation membrane residual gas 23, the second recovery separation membrane permeate gas 24 or the second recovery separation membrane residual gas 25.

Preferably, the heat exchange step may include the steps of exchanging, by the first heat exchanger network 200, heat between the gas 3 compressed by the first compressor and at least one of the first capture separation membrane permeate gas 5, the first capture separation membrane residual gas 6, the #2-1 capture separation membrane permeate gas 13, the #2-1 capture separation membrane residual gas 14 or the first recovery separation membrane residual gas 23; and exchanging, by the second heat exchanger network 300, heat between the first capture separation membrane permeate gas 5 and at least one of the first capture separation membrane residual gas 6, the second capture separation membrane permeate gas 10, the #2-1 capture separation membrane residual gas 14 or the first recovery separation membrane residual gas 23.

Most preferably, the heat exchange step may include a #1-1 heat exchange step of exchanging, by the #1-1 heat exchanger 201, heat between the gas 3 compressed by the first compressor and the #2-1 capture separation membrane permeate gas 13; a #1-2 heat exchange step of exchanging, by the #1-2 heat exchanger 202, heat between the gas 31 compressed by the first compressor and cooled by the #1-1 heat exchanger and the first capture separation membrane permeate gas 5; a #1-3 heat exchange step of exchanging, by the #1-3 heat exchanger, heat between the gas 32 compressed by the first compressor and cooled by the #1-2 heat exchanger and the nitrogen dominated gas 35 including at least one of the first capture separation membrane residual gas 6, the #2-1 capture separation membrane residual gas 14 or the first recovery separation membrane residual gas 23; a #2-1 heat exchange step of exchanging, by the #2-1 heat exchanger 301, heat between the first capture separation membrane permeate gas 5 and the second capture separation membrane permeate gas 10; and a #2-2 heat exchange step of exchanging, by the #2-2 heat exchanger 302, heat between the first capture separation membrane permeate gas 61 cooled by the #2-1 heat exchanger and the gas 38 heated by the #1-3 heat exchanger.

The first capture separation membrane permeate gas 5 may undergo cold heat recovery through the first heat exchanger network 200 while it is kept in low temperature state cooled in the heat exchange step.

In case where the first capture separation membrane residual gas 6 is discharged while it is kept in low temperature state cooled in the heat exchange step, the first capture separation membrane residual gas 6 may be discharged after cold heat recovery in the heat exchange step before it is discharged. However, in case where the first capture separation membrane residual gas 6 is fed into the #1-1 capture separation membrane 104, the first capture separation membrane residual gas 6 may be fed into the #1-1 capture separation membrane 104 without cold heat recovery in the heat exchange step.

The second capture separation membrane permeate gas 10 may be fed into the heat exchanger network while it is kept in low temperature state cooled in the heat exchange step, undergo cold heat recovery, and then fed into the second compressor 110.

In case where the second capture separation membrane residual gas 12 is discharged, the second capture separation membrane residual gas 12 may be discharged after cold heat recovery in the heat exchange step.

In case where the second capture separation membrane residual gas 12 is fed into the #2-1 capture separation membrane 108, the second capture separation membrane residual gas 12 may not undergo cold heat recovery in the heat exchange step.

In case where the present disclosure further includes the #1-1 capture step, it is preferable to feed the first capture separation membrane residual gas 6 into the #1-1 capture separation membrane 104 without heat exchange in the heat exchange step since it may be possible to increase the separation efficiency of the #1-1 capture separation membrane 104. Additionally, in case where the present disclosure further includes the #2-1 capture step, it is preferable to feed the second capture separation membrane residual gas 12 into the #2-1 capture separation membrane 108 without heat exchange in the heat exchange step since it may be possible to increase the separation efficiency of the #2-1 capture separation membrane 108.

In case where the present disclosure includes the #2-1 capture step, the #2-1 capture separation membrane permeate gas 13 and the #2-1 capture separation membrane residual gas 14 are kept in low temperature state, and at least one of the #2-1 capture separation membrane permeate gas 13 or the #2-1 capture separation membrane residual gas 14 may undergo cold heat recovery in the heat exchange step.

When the process of capturing carbon dioxide in flue gas of the present disclosure further includes the third capture step, the heat exchange step may use at least one of the first heat exchanger network 200 that cools down the gas 3 compressed by the first compressor fed into the first capture separation membrane 102, the second heat exchanger network 300, 400 that cools down the first capture separation membrane permeate gas 5 fed into the second capture separation membrane 106, or the third heat exchanger network that cools down the second capture separation membrane permeate gas 10 by heat exchange with low temperature streams in the process.

Meanwhile, in case where the heat exchange step facilitates cooling of the gas 3 compressed by the first compressor through the first heat exchanger network 200, the present disclosure may further include a first cooling step of additionally cooling down, by the first cooling heat exchanger 204, the gas 3 compressed by the first compressor by heat exchange with the refrigerant.

Additionally, in case where the heat exchange step facilitates cooling of the first capture separation membrane permeate gas 5 through the second heat exchanger network 300, 400, the present disclosure may further include a second cooling step of additionally cooling down, by the second cooling heat exchanger 303, 408, the first capture separation membrane permeate gas 5 by heat exchange with the refrigerant.

In case where the nitrogen dominated gas including at least one of the first capture separation membrane residual gas 6, the #2-1 capture separation membrane residual gas 14 or the first recovery separation membrane residual gas 23 has sufficiently low temperature even after it is heated in the heat exchange step, the present disclosure may further include an additional cooling step of cooling down, by the additional heat exchanger 111, the gas 15 compressed by the second compressor by heat exchange between the nitrogen dominated gas 64 heated by the #1-3 heat exchanger 203 and the #2-2 heat exchanger 302 and the gas 15 compressed by the second compressor.

When the present disclosure further includes the additional cooling step, the liquefaction heat exchanger 112 may cool down the gas 16 compressed by the second compressor and cooled by the additional heat exchanger.

The first capture separation membrane 102, the #1-1 capture separation membrane 104, the second capture separation membrane 106, the #2-1 capture separation membrane 108 and the first recovery separation membrane 115 may be made of the same or different materials, and may be made of at least one of polysulfone (PSF) or polyimide (PI).

When the heat exchange step facilitates cooling of the gas 3 compressed by the first compressor, the temperature of the gas fed into the first capture separation membrane 102 and the #1-1 capture separation membrane 104 may be -40 to 10°C, and most preferably -25 to -15°C, and when the heat exchange step facilitates cooling of the first capture separation membrane permeate gas 5, the temperature of the gas fed into the second capture separation membrane 106 and the #2-1 capture separation membrane 108 may be -40 to 0°C, and most preferably -25 to -15°C.

Accordingly, it is more preferred that at least one of the first capture separation membrane 102, the #1-1 capture separation membrane 104, the second capture separation membrane 106, the third capture separation membrane 118 or the #2-1 capture separation membrane 108 is made of at least one of polysulfone (PSF) or polyimide (PI) since it is possible to remarkably improve the carbon dioxide separation efficiency.

Hereinafter, the present disclosure will be described in more detail through examples, but the scope and substance of the present disclosure should not be construed as being reduced or limited to the following examples.

### Example 1

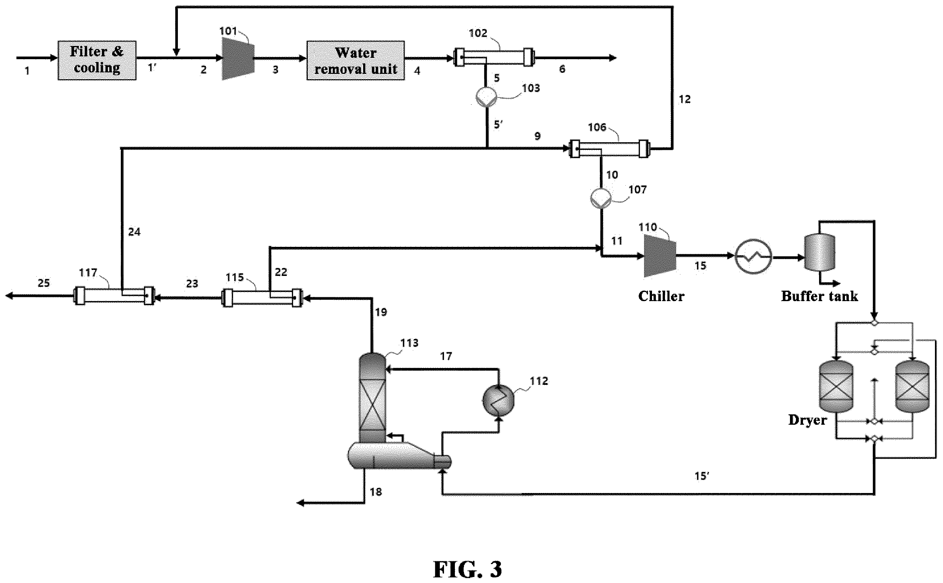

FIG. 3 is a diagram showing the process of capturing carbon dioxide in flue gas, including the second capture separation membrane and the second recovery separation membrane according to another embodiment of the present disclosure.

In example 1, the process was designed as shown in FIG. 3, carbon dioxide in flue gas was captured and liquefied for each stream as shown in the following Table 3, and the process results are shown in the following Table 4. In this instance, the first capture separation membrane 102, the second capture separation membrane 106, the first recovery separation membrane 115 and the second recovery separation membrane 117 were made of polysulfone (PSF).

**[Table 3]**

| Stream# | Temperature (°C) | Pressure (bar) | Composition (mol%) | | | | Flow rate (Nm³/h) |
|---|---|---|---|---|---|---|---|
| | | | CO₂ | N₂ | O₂ | H₂O | |
| 1 | 63.5 | 1.13 | 13.6 | 61.8 | 1.5 | 23.1 | 100,000 |
| 1' | 37 | 1.1 | 16.8 | 76.2 | 1.9 | 5.1 | 81,099 |
| 2 | 37 | 1.1 | 16.1 | 76.9 | 2.4 | 4.6 | 91,126 |
| 3 | 37 | 2.6 | 16.1 | 76.9 | 2.4 | 4.6 | 91,126 |
| 4 | 37 | 2.4 | 16.9 | 80.5 | 2.5 | 0.05 | 87,022 |
| 5 | 32 | 0.3 | 56.1 | 39.0 | 4.7 | 0.2 | 23,606 |
| 6 | 37 | 2.3 | 2.2 | 95.9 | 1.9 | - | 63,416 |
| 5' | 37 | 1.1 | 56.1 | 39.0 | 4.7 | 0.2 | 23,606 |
| 10 | 35 | 0.3 | 88.7 | 7.0 | 4.0 | 0.3 | 14,161 |
| 12 | 37 | 1.1 | 10.9 | 82.3 | 6.8 | - | 10,027 |
| 11 | 35 | 1.1 | 88.7 | 7.0 | 4.0 | 0.3 | 14,161 |
| 15 | 37 | 24.2 | 89.4 | 6.2 | 4.1 | 0.3 | 16,623 |
| 15' | 4 | 23.6 | 89.7 | 6.2 | 4.1 | - | 16,581 |
| 17 | -33 | 23.2 | 89.7 | 6.2 | 4.1 | - | 16,581 |
| 18 | -20.4 | 22.7 | 99.0 | 0.1 | 0.8 | - | 12,380 |
| 19 | -33 | 21.0 | 62.0 | 24.0 | 14.0 | - | 4,200 |
| 22 | -35 | 1.1 | 93.7 | 1.4 | 4.9 | - | 2,352 |
| 23 | -20 | 20.9 | 21.2 | 53.4 | 25.4 | - | 1,848 |
| 24 | -35 | 1.1 | 69.0 | 8.5 | 22.5 | - | 554 |
| 25 | -20 | 20.8 | 0.7 | 72.6 | 26.7 | - | 1,294 |

**[Table 4]**

| Example 1 | |
|---|---|
| CO₂ recovery (%) | 91 |

As shown in Table 4, it can be seen that the apparatus and process for capturing carbon dioxide in flue gas of example 1 of the present disclosure achieves the carbon dioxide recovery of 91%.

### Example 2

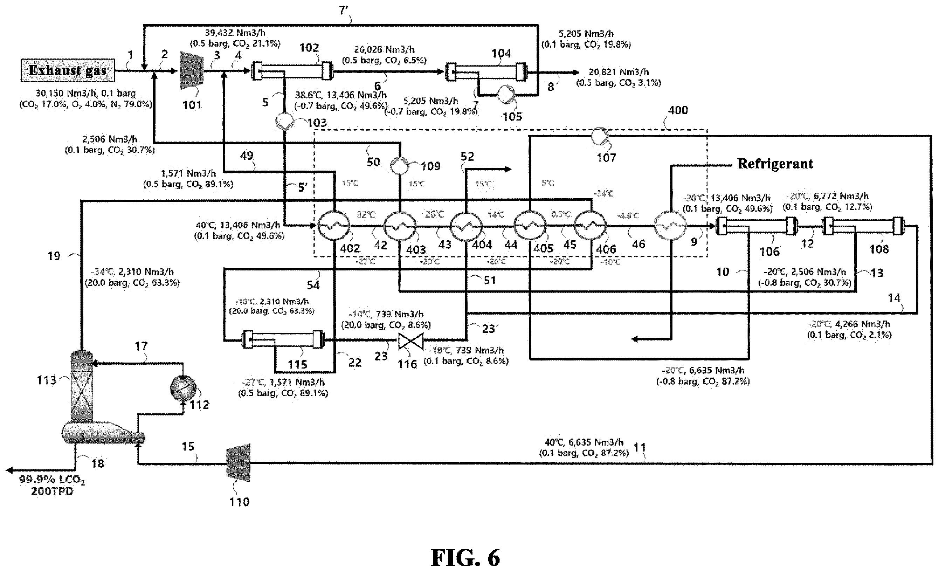

FIG. 6 is a diagram showing the process of capturing carbon dioxide in flue gas, including the #1-1 capture separation membrane, the second capture separation membrane, the #2-1 capture separation membrane and the second heat exchanger network according to another embodiment of the present disclosure.

The carbon dioxide capture apparatus and process was designed as shown in FIG. 6 and the process was performed in the conditions as shown in the following Table 5. In this instance, the first capture separation membrane 102, the #1-1 capture separation membrane 104, the second capture separation membrane 106, the #2-1 capture separation membrane 108 and the first recovery separation membrane 115 were made of polysulfone (PSF). mol% of the high purity carbon dioxide liquid 18 obtained by the carbon dioxide capture process of example 2 was 99.9%, and the amount of production was 200 TPD (ton/day).

**[Table 5]**

| Stream# | Temperature | Pressure | Flow rate | CO₂ | O₂ | N₂ |
|---|---|---|---|---|---|---|
| | (°C) | (bar) | (Nm³/h) | (mol%) | (mol%) | (mol%) |
| 1 | 40.0 | 1.1 | 30,150 | 17.0 | 4.0 | 79.0 |
| 2 | 40.0 | 1.1 | 37,861 | 18.3 | 5.9 | 75.8 |
| 3 | 40.0 | 1.5 | 37,861 | 18.3 | 5.9 | 75.8 |
| 4 | 38.8 | 1.5 | 39,432 | 21.1 | 6.0 | 72.8 |
| 5 | 38.6 | 0.3 | 13,406 | 49.6 | 9.6 | 40.8 |
| 6 | 38.6 | 1.5 | 26,026 | 6.5 | 4.2 | 89.3 |
| 7 | 38.5 | 0.3 | 5,205 | 19.8 | 9.0 | 71.2 |
| 7' | 38.5 | 1.1 | 5,205 | 19.8 | 9.0 | 71.2 |
| 8 | 38.5 | 1.5 | 20,821 | 3.1 | 3.0 | 93.9 |
| 5' | 40.0 | 1.1 | 13,406 | 49.6 | 9.6 | 40.8 |
| 42 | 32.0 | 1.1 | 13,406 | 49.6 | 9.6 | 40.8 |
| 43 | 26 | 1.1 | 13,406 | 49.6 | 9.6 | 40.8 |
| 44 | 14 | 1.1 | 13,406 | 49.6 | 9.6 | 40.8 |
| 45 | 0.5 | 1.1 | 13,406 | 49.6 | 9.6 | 40.8 |
| 46 | -4.6 | 1.1 | 13,406 | 49.6 | 9.6 | 40.8 |
| 9 | -20 | 1.1 | 13,406 | 49.6 | 9.6 | 40.8 |
| 10 | -20 | -0.8 | 6,635 | 87.2 | 7.0 | 5.8 |
| 12 | -20 | 1.1 | 6,772 | 12.7 | 12.1 | 75.2 |
| 13 | -20 | 0.2 | 2,506 | 30.7 | 22.3 | 47.0 |
| 50 | 40 | 0.2 | 2,506 | 30.7 | 22.3 | 47.0 |
| 14 | -20 | 1.1 | 4,266 | 2.1 | 6.2 | 91.7 |
| 11 | 40 | 1.1 | 6,635 | 87.2 | 7.0 | 5.8 |
| 15 | 40 | 24.2 | 6,635 | 87.2 | 7.0 | 5.8 |
| 17 | -33 | 23.2 | 6,635 | 87.2 | 7.0 | 5.8 |
| 18 | -18.4 | 21.0 | 4,325 | 99.9 | 0.1 | - |
| 19 | -34 | 21.0 | 2,310 | 63.3 | 20.1 | 16.6 |
| 54 | -10 | 21.0 | 2,310 | 63.3 | 20.1 | 16.6 |
| 22 | -27 | 1.5 | 1,571 | 89.1 | 9.6 | 1.3 |
| 49 | 15 | 1.5 | 1,571 | 89.1 | 9.6 | 1.3 |
| 23 | -10 | 21.0 | 739 | 8.6 | 42.4 | 49.0 |
| 23' | -18 | 1.1 | 739 | 8.6 | 42.4 | 49.0 |
| 51 | -20 | 1.1 | 5,005 | 3.1 | 11.5 | 85.4 |
| 52 | 15 | 1.1 | 5,005 | 3.1 | 11.5 | 85.4 |

### Example 3

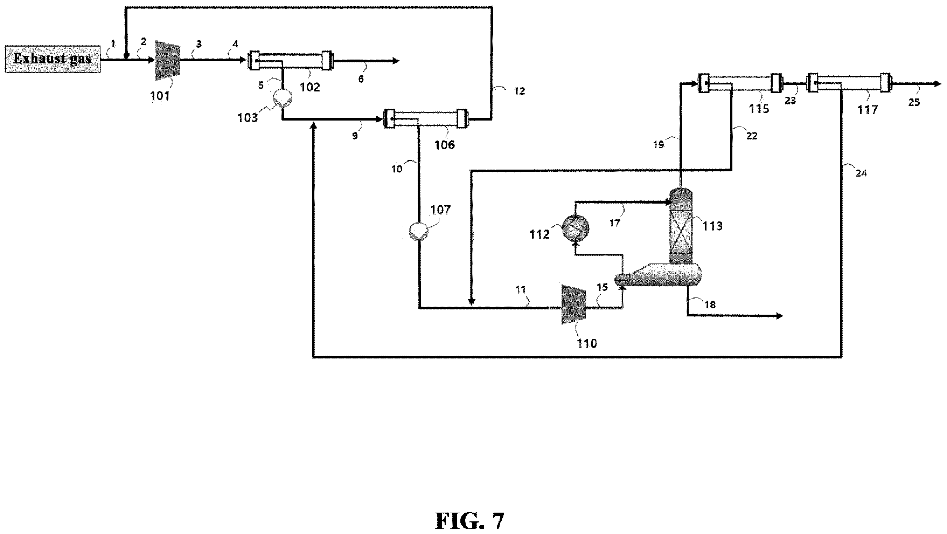

FIG. 7 is a diagram showing the process of capturing carbon dioxide in flue gas, including the second capture separation membrane and the second recovery separation membrane according to another embodiment of the present disclosure.

The carbon dioxide capture apparatus and process was designed as shown in FIG. 7 and the process was performed in the conditions as shown in the following Table 6. In this instance, the first capture separation membrane 102, the second capture separation membrane 106, the first recovery separation membrane 115 and the second recovery separation membrane 117 were made of polysulfone (PSF). mol% of the high purity carbon dioxide liquid 18 obtained by the carbon dioxide process of comparative example was 99.9%, and the amount of production was 200 TPD (ton/day).

**[Table 6]**

| Stream# | Temperature | Pressure | Flow rate | CO₂ | O₂ | N₂ |
|---|---|---|---|---|---|---|
| | (°C) | (bar) | (Nm³/h) | (mol%) | (mol%) | (mol%) |
| 1 | 40.0 | 1.1 | 31,533 | 17.0 | 4.0 | 79.0 |
| 2 | 40.0 | 1.1 | 37,009 | 18.4 | 5.0 | 76.6 |
| 3(4) | 40.0 | 3.1 | 37,009 | 18.4 | 5.0 | 76.6 |
| 5 | 39.5 | 0.3 | 10,554 | 55.2 | 8.4 | 36.4 |
| 6 | 39.5 | 3.1 | 26,455 | 3.7 | 3.6 | 92.7 |
| 9 | 34.4 | 1.1 | 10,957 | 56 | 8.8 | 35.2 |
| 10 | 34.1 | 0.3 | 5,481 | 85.8 | 6.9 | 7.4 |
| 12 | 34.1 | 1.1 | 5,476 | 26.3 | 10.7 | 63.0 |
| 11 | 26.4 | 1.1 | 6,633 | 87.2 | 6.5 | 6.2 |
| 15 | 40.0 | 24.2 | 6,633 | 87.2 | 6.5 | 6.2 |
| 17 | -33 | 23.2 | 6,633 | 87.2 | 6.5 | 6.2 |
| 18 | -18.4 | 21.0 | 4,330 | 99.9 | 0.1 | - |
| 19 | -25 | 21.0 | 2,303 | 63.4 | 18.7 | 17.9 |
| 22 | -40.5 | 1.1 | 1,152 | 94.2 | 5.1 | 0.7 |
| 23 | -25 | 21.0 | 1,151 | 32.5 | 32.4 | 35.1 |
| 24 | -34.4 | 1.1 | 403 | 77.9 | 18.9 | 3.2 |
| 25 | -25.0 | 21.0 | 748 | 8.1 | 39.7 | 52.2 |

### Experimental example 2. Electricity consumption evaluation

The amount of electricity required in the carbon dioxide capture process according to examples 2 and 3 was measured, and the measurements are shown in the following Table 7.

**[Table 7]**

| Classification | Device | Electricity consumption (kw) | |
|---|---|---|---|
| | | Example 3 | Example 2 |
| CO₂ capture | Compressor | 2,357 | 653 |
| | Vacuum pump | 842 | 1,696 |
| | Sum | 3,199 | 2,349 |
| CO₂ liquefaction | Compressor | 1,060 | 1,060 |
| | Chiller | 811 | 889 |
| | Sum | 1,871 | 1,949 |
| Total | | 5,070 | 4,298 |

As shown in Tables 5 to 7, in the carbon dioxide capture apparatus and process of examples 2 and 3 having the same fraction of carbon dioxide and the same amount of production, it can be seen that electricity consumption in the carbon dioxide capture apparatus and process of example 2 equipped with the heat exchanger network is much lower.

More specifically, in example 2, the first compressor compressed to the pressure of 0.5 barg, and to achieve the same production capacity, the first capture separation membrane feed gas increased in flow rate, and the capacity of the chiller increased by the introduction of the cooling heat exchanger, but it can be seen that energy consumption is much lower than example 3. That is, example 2 of the present disclosure equipped with the heat exchanger network showed the outstanding carbon dioxide separation effect despite the reduction in pressure to which the first compressor has compressed, thereby remarkably reducing electrical energy consumption for obtaining the same production capacity, and an increase in energy by the increased capacity of the chiller (the liquefaction heat exchanger) corresponds to 12% of the first compressor, showing a reduction in total energy consumption.

### Example 4

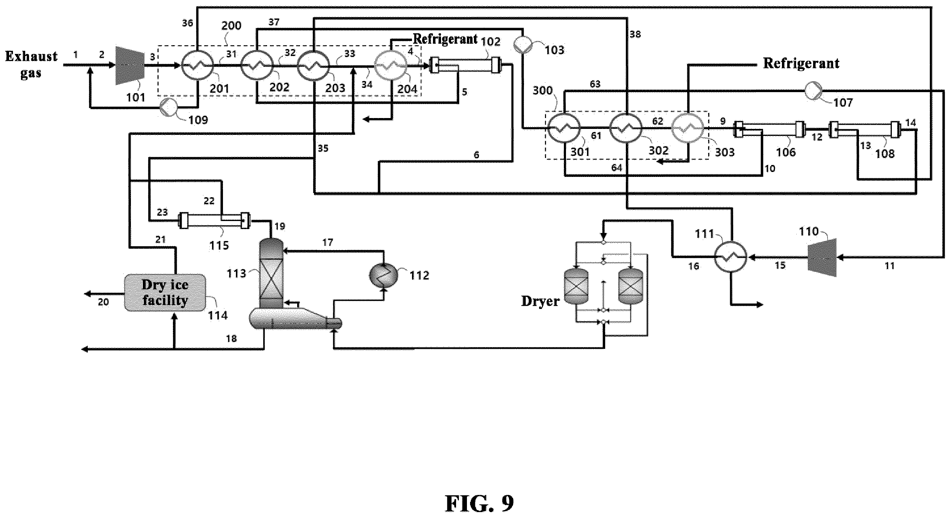

FIG. 9 is a diagram showing the process of capturing carbon dioxide in flue gas, including the second capture separation membrane, the #2-1 capture separation membrane, the first heat exchanger network, the second heat exchanger network and the dry ice production unit according to another embodiment of the present disclosure.

The carbon dioxide capture apparatus and process was designed as shown in FIG. 9 and the process was performed in the conditions as shown in the following Table 8. In this instance, the first capture separation membrane 102, the second capture separation membrane 106, the #2-1 capture separation membrane 108 and the first recovery separation membrane 115 were made of polysulfone (PSF). mol% of the high purity carbon dioxide liquid 18 obtained by the carbon dioxide process of example was 99.9%, and the amount of production was 461 TPD (ton/day).

**[Table 8]**

| Stream# | Temperature (°C) | Pressure (bar) | Flow rate (Nm³/h) | CO₂ (mol%) | O₂ (mol%) | N₂ (mol%) |
|---|---|---|---|---|---|---|
| 1 | 40 | 1.1 | 28,400 | 17.0 | 4.0 | 79.0 |
| 2 | 40 | 1.1 | 30,533 | 18.1 | 5.4 | 76.5 |
| 3 | 40 | 1.5 | 30,533 | 18.1 | 5.4 | 76.5 |
| 31 | 37 | 1.5 | 30,533 | 18.1 | 5.4 | 76.5 |
| 32 | 11 | 1.5 | 30,533 | 18.1 | 5.4 | 76.5 |
| 33 | -5 | 1.5 | 30,533 | 18.1 | 5.4 | 76.5 |
| 34 | -18 | 1.5 | 37,665 | 18.1 | 5.4 | 76.5 |
| 35 | -22 | 1.1 | 24,085 | 2.1 | 4.7 | 93.2 |
| 36 | 25 | 0.2 | 2,133 | 33.4 | 23.8 | 42.8 |
| 37 | 18 | 0.2 | 18,460 | 65.8 | 6.9 | 27.3 |
| 38 | 0 | 1.1 | 24,085 | 2.1 | 4.7 | 93.2 |
| 4 | -20 | 1.5 | 37,665 | 18.1 | 5.4 | 76.5 |
| 5 | -20 | 0.2 | 18,460 | 65.8 | 6.9 | 27.3 |
| 6 | -20 | 1.5 | 19,205 | 1.9 | 2.7 | 95.4 |
| 61 | 13 | 1.1 | 18,460 | 65.8 | 6.9 | 27.3 |
| 62 | 5 | 1.1 | 18,460 | 65.8 | 6.9 | 27.3 |
| 63 | 15 | 0.2 | 12,182 | 93.2 | 3.9 | 2.9 |
| 64 | 7 | 1.1 | 24,085 | 2.1 | 4.7 | 93.2 |
| 9 | -20 | 1.1 | 18,460 | 65.8 | 6.9 | 27.3 |
| 10 | -20 | 0.2 | 12,182 | 93.2 | 3.9 | 2.9 |
| 11 | 40 | 1.1 | 12,182 | 93.2 | 3.9 | 2.9 |
| 12 | -20 | 1.1 | 6,278 | 12.6 | 12.6 | 74.8 |
| 13 | -20 | 0.2 | 2,133 | 33.4 | 23.8 | 42.8 |
| 14 | -20 | 1.1 | 4,145 | 1.9 | 6.8 | 91.3 |
| 15 | 40 | 24.2 | 12,182 | 93.2 | 3.9 | 2.9 |
| 16 | 26 | 24.0 | 12,182 | 93.2 | 3.9 | 2.9 |
| 17 | -33 | 24.2 | 12,182 | 93.2 | 3.9 | 2.9 |
| 18 | -18 | 21.0 | 9,808 | 99.9 | 0.1 | - |
| 19 | -35 | 21.0 | 2,166 | 62.3 | 21.6 | 16.1 |
| 20 | -78 | 1.0 | 4,315 | 99.9 | 0.1 | - |
| 21 | -70 | 1.5 | 5,492 | 99.9 | 0.1 | - |
| 22 | -55 | 1.5 | 1,430 | 89.1 | 9.7 | 1.2 |
| 23 | -10 | 21.0 | 735 | 10.0 | 44.8 | 45.2 |

### Example 5

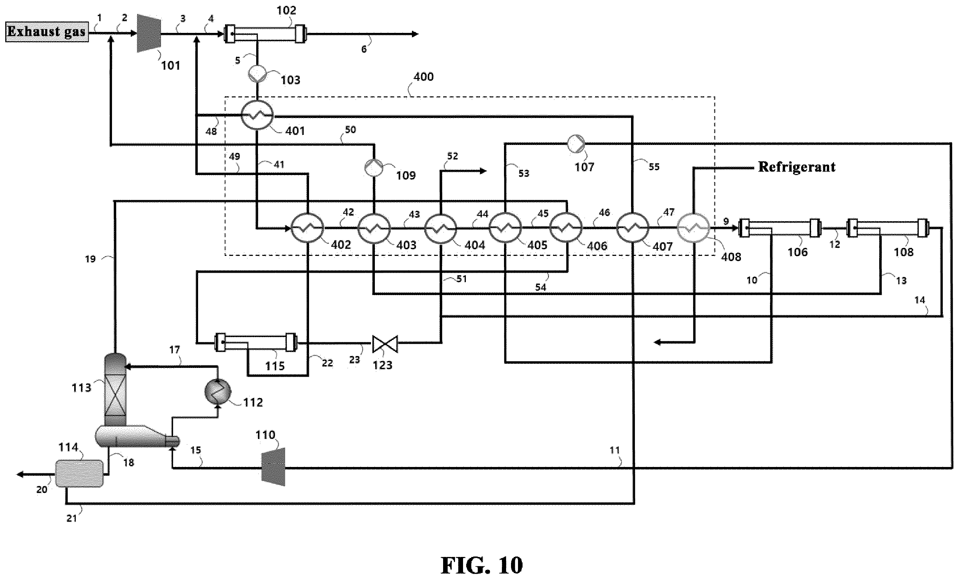

FIG. 10 is a diagram showing the process of capturing carbon dioxide in flue gas, including the second capture separation membrane, the #2-1 capture separation membrane, the second heat exchanger network and the dry ice production unit according to another embodiment of the present disclosure.

The carbon dioxide capture apparatus and process was designed as shown in FIG. 10 and the process was performed in the conditions as shown in the following Table 9. In this instance, the first capture separation membrane 102, the second capture separation membrane 106, the #2-1 capture separation membrane 108 and the first recovery separation membrane 115 were made of polysulfone (PSF). mol% of the high purity carbon dioxide liquid 18 obtained by the carbon dioxide process of example was 99.9%, and the amount of production was 461 TPD (ton/day).

**[Table 9]**

| Stream# | Temperature (°C) | Pressure (bar) | Flow rate (Nm³/h) | CO₂ (mol%) | O₂ (mol%) | N₂ (mol%) |
|---|---|---|---|---|---|---|
| 1 | 40 | 1.1 | 28,400 | 17.0 | 4.0 | 79.0 |
| 2 | 40 | 1.1 | 32,489 | 18.1 | 5.6 | 76.3 |
| 3 | 40 | 1.5 | 32,489 | 18.1 | 5.6 | 76.3 |
| 4 | 40 | 1.5 | 41,565 | 35.0 | 5.1 | 59.8 |
| 5 | 40 | 0.2 | 27,026 | 52.8 | 6.8 | 40.3 |
| 6 | 40 | 1.5 | 14,539 | 1.9 | 2.0 | 96.1 |
| 41 | 32 | 1.1 | 27,026 | 52.8 | 6.8 | 40.3 |
| 42 | 26 | 1.1 | 27,026 | 52.8 | 6.8 | 40.3 |
| 43 | 21 | 1.1 | 27,026 | 52.8 | 6.8 | 40.3 |
| 44 | 11 | 1.1 | 27,026 | 52.8 | 6.8 | 40.3 |
| 45 | 1 | 1.1 | 27,026 | 52.8 | 6.8 | 40.3 |
| 46 | -6 | 1.1 | 27,026 | 52.8 | 6.8 | 40.3 |
| 47 | -17 | 1.1 | 27,026 | 52.8 | 6.8 | 40.3 |
| 48 | 20 | 1.5 | 5,484 | 99.9 | 0.1 | - |
| 49 | 15 | 1.5 | 3,592 | 89.3 | 8.7 | 2.0 |
| 50 | 15 | 1.1 | 4,089 | 25.5 | 16.6 | 57.8 |
| 51 | -20 | 1.1 | 9,552 | 2.6 | 8.8 | 88.6 |
| 52 | 10 | 1.1 | 9,552 | 2.6 | 8.8 | 88.6 |
| 53 | 0 | 0.2 | 14,999 | 87.3 | 5.6 | 7.1 |
| 54 | -10 | 21.0 | 5,206 | 63.5 | 16.0 | 20.5 |
| 55 | -18 | 1.5 | 5,484 | 99.9 | 0.1 | - |
| 9 | -20 | 1.1 | 27,026 | 52.8 | 6.8 | 40.3 |
| 10 | -20 | 0.2 | 14,999 | 87.3 | 5.6 | 7.1 |
| 11 | 40 | 1.1 | 14,999 | 87.3 | 5.6 | 7.1 |
| 12 | -20 | 1.1 | 11,813 | 9.9 | 8.4 | 81.7 |
| 13 | -20 | 0.2 | 4,089 | 25.5 | 16.6 | 57.8 |
| 14 | -20 | 1.1 | 7,938 | 1.9 | 4.1 | 94.0 |
| 15 | 40 | 24.2 | 14,999 | 87.3 | 5.6 | 7.1 |
| 17 | -33 | 23.2 | 14,999 | 87.3 | 5.6 | 7.1 |
| 18 | -18 | 21.0 | 9,793 | 99.9 | 0.1 | - |
| 19 | -35 | 21.0 | 5,206 | 63.5 | 16.0 | 20.5 |
| 20 | -78 | 1.0 | 4,309 | 99.9 | 0.1 | - |
| 21 | -70 | 1.5 | 5,484 | 99.9 | 0.1 | - |
| 22 | -28 | 1.5 | 3,592 | 89.3 | 8.7 | 2.0 |
| 23 | -10 | 21.0 | 1,614 | 5.9 | 32.2 | 61.9 |

### Example 6

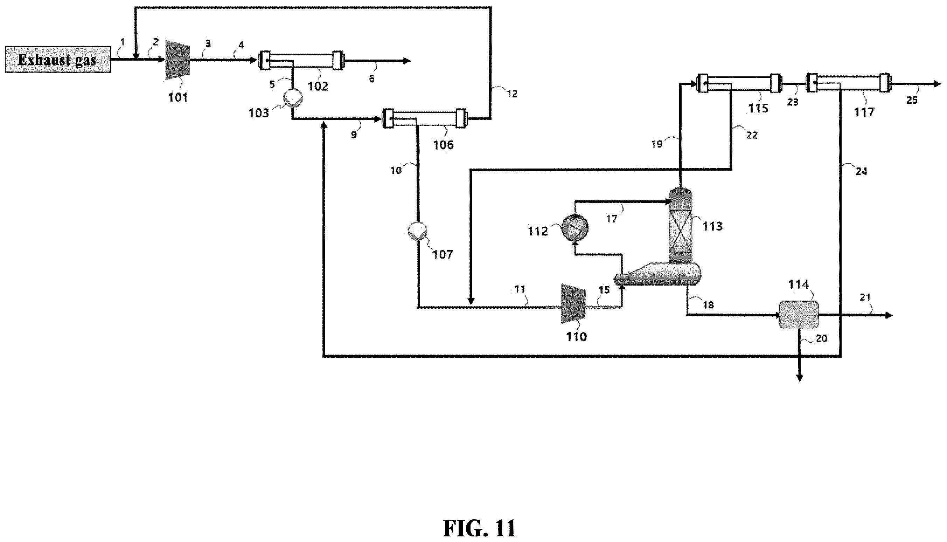

The carbon dioxide capture apparatus and process was designed as shown in FIG. 11 and the process was performed in the conditions as shown in the following Table 10. In this instance, the first capture separation membrane 102, the second capture separation membrane 106, the first recovery separation membrane 115 and the second recovery separation membrane 117 were made of polysulfone (PSF). mol% of the high purity carbon dioxide liquid 18 obtained by the carbon dioxide process of example was 99.9%.

**[Table 10]**

| Stream# | Temperature (°C) | Pressure (bar) | Flow rate (Nm³/h) | CO₂ (mol%) | O₂ (mol%) | N₂ (mol%) |
|---|---|---|---|---|---|---|
| 1 | 40.0 | 1.1 | 74,442 | 17.0 | 4.0 | 79.0 |
| 2 | 40.0 | 1.1 | 87,369 | 18.4 | 5.0 | 76.6 |
| 4 | 40.0 | 3.1 | 87,369 | 18.4 | 5.0 | 76.6 |
| 5 | 39.5 | 0.3 | 24,916 | 55.2 | 8.4 | 36.4 |
| 6 | 39.5 | 3.1 | 62,454 | 3.7 | 3.6 | 92.7 |
| 9 | 34.4 | 1.1 | 25,867 | 56 | 8.8 | 35.2 |
| 10 | 34.1 | 0.3 | 12,940 | 85.8 | 6.9 | 7.4 |
| 12 | 34.1 | 1.1 | 12,928 | 26.3 | 10.7 | 63.0 |
| 11 | 26.4 | 1.1 | 15,659 | 87.2 | 6.5 | 6.2 |
| 15 | 40.0 | 24.2 | 15,659 | 87.2 | 6.5 | 6.2 |
| 17 | -33 | 23.2 | 15,659 | 87.2 | 6.5 | 6.2 |
| 18 | -18.4 | 21.0 | 10,222 | 99.9 | 0.1 | - |
| 19 | -25 | 21.0 | 5,437 | 63.4 | 18.7 | 17.9 |
| 20 | -78 | 1.0 | 4,498 | 99.9 | 0.1 | - |
| 21 | -70 | 1.5 | 5,724 | 99.9 | 0.1 | - |
| 22 | -40.5 | 1.1 | 2,720 | 94.2 | 5.1 | 0.7 |
| 23 | -25 | 21.0 | 2,717 | 32.5 | 32.4 | 35.1 |
| 24 | -34.4 | 1.1 | 951 | 77.9 | 18.9 | 3.2 |
| 25 | -25.0 | 21.0 | 1,766 | 8.1 | 39.7 | 52.2 |

### Experimental example 3

The amount of electricity required in the carbon dioxide capture process according to example and the carbon dioxide recovery was measured and the measurements are shown in the following Table 11.

**[Table 11]**

| Classification | | Example 4 | Example 5 | Example 6 (cold heat not recovered) |
|---|---|---|---|---|
| Electricity consumption (kw) | CO₂ capture | 2,499 | 3,318 | 7,358 |
| | CO₂ liquefaction | 3,694 | 4,244 | 4,303 |
| | Dry ice production | 308 | 308 | 308 |
| Total | | 6,501 | 7,870 | 11,969 |
| Carbon dioxide recovery (%) | | 89.3 | 89.2 | 80.1% |

As shown in Table 11, it can be seen that the process and apparatus for capturing carbon dioxide in flue gas of the present disclosure may not only reduce electricity consumption but also improve the carbon dioxide recovery, as well as producing dry ice.

### [Detailed Description of Main Elements]

1: Flue gas
1': Filtered and cooled flue gas
2: First compressor feed gas
3: Gas compressed by first compressor
31: Gas compressed by first compressor and cooled by #1-1 heat exchanger
32: Gas compressed by first compressor and cooled by #1-2 heat exchanger
33: Gas compressed by first compressor and cooled by #1-3 heat exchanger
34: First cooling heat exchanger feed gas
35: Nitrogen dominated gas
36: Gas heated by #1-1 heat exchanger
37: Gas heated by #1-2 heat exchanger
38: Gas heated by #1-3 heat exchanger
4: First capture separation membrane feed gas
5: First capture separation membrane permeate gas
5': First capture separation membrane permeate gas compressed by vacuum pump
6: First capture separation membrane residual gas
7: #1-1 capture separation membrane permeate gas
7': #1-1 capture separation membrane permeate gas compressed by vacuum pump
8: #1-1 capture separation membrane residual gas
41: First capture separation membrane permeate gas cooled by #2-1 heat exchanger
42: First capture separation membrane permeate gas cooled by #2-2 heat exchanger
43: First capture separation membrane permeate gas cooled by #2-3 heat exchanger
44: First capture separation membrane permeate gas cooled by #2-4 heat exchanger
45: First capture separation membrane permeate gas cooled by #2-5 heat exchanger
46: First capture separation membrane permeate gas cooled by #2-6 heat exchanger
47: First capture separation membrane permeate gas cooled by recovery heat exchanger
48: Gas heated by #2-1 heat exchanger
49: Gas heated by #2-2 heat exchanger
50: Gas heated by #2-3 heat exchanger
51: #2-4 heat exchanger feed gas
52: Gas heated by #2-4 heat exchanger
53: Gas heated by #2-5 heat exchanger
54: Gas heated by #2-6 heat exchanger
55: Gas heated by recovery heat exchanger
9: Second capture separation membrane feed gas
10: Second capture separation membrane permeate gas
11: Second compressor feed gas
12: Second capture separation membrane residual gas
13: #2-1 capture separation membrane permeate gas
14: #2-1 capture separation membrane residual gas
15: Gas compressed by second compressor
15': Gas compressed by second compressor and having passed through chiller and dryer
16: Gas compressed by second compressor and cooled by additional heat exchanger
17: Gas cooled by liquefaction heat exchanger
18: High purity carbon dioxide liquid
19: Carbon dioxide containing gas
20: Dry ice
21: Residual carbon dioxide gas
22: First recovery separation membrane permeate gas
23: First recovery separation membrane residual gas
23': First recovery separation membrane residual gas compressed by vacuum pump
24: Second recovery separation membrane permeate gas
25: Second recovery separation membrane residual gas
26: Third capture separation membrane feed gas
27: Third capture separation membrane permeate gas
28: Third capture separation membrane residual gas
61: First capture separation membrane permeate gas cooled by #2-1 heat exchanger
62: First capture separation membrane permeate gas cooled by #2-2 heat exchanger
63: Gas heated by #2-1 heat exchanger
64: Gas heated by #2-2 heat exchanger
101: First compressor
102: First capture separation membrane
103: Vacuum pump
104: #1-1 capture separation membrane
105: Vacuum pump
200: First heat exchanger network
201: #1-1 heat exchanger
202: #1-2 heat exchanger
203: #1-3 heat exchanger
204: First cooling heat exchanger
300: Second heat exchanger network
301: #2-1 heat exchanger
302: #2-2 heat exchanger
303: Second cooling heat exchanger
400: Second heat exchanger network
401: #2-1 heat exchanger
402: #2-2 heat exchanger
403: #2-3 heat exchanger
404: #2-4 heat exchanger
405: #2-5 heat exchanger
406: #2-6 heat exchanger
407: Recovery heat exchanger
408: Second cooling heat exchanger
106: Second capture separation membrane
107: Vacuum pump
108: #2-1 capture separation membrane
109: Vacuum pump
110: Second compressor
111: Additional heat exchanger
112: Liquefaction heat exchanger
113: Separation tower
114: Dry ice production unit
115: First recovery separation membrane
116: Valve
117: Second recovery separation membrane
118: Third capture separation membrane

## Claims

1. An apparatus for capturing carbon dioxide in flue gas, comprising:
a first compressor configured to compress a first compressor feed gas including flue gas;
a first capture separation membrane configured to separate a first capture separation membrane feed gas including the gas compressed by the first compressor into a first capture separation membrane permeate gas and a first capture separation membrane residual gas;
a second compressor configured to compress a second compressor feed gas including the first capture separation membrane permeate gas;
a liquefaction heat exchanger configured to cool down the gas compressed by the second compressor;
a separation tower configured to separate the gas cooled by the liquefaction heat exchanger into a high purity carbon dioxide liquid and a carbon dioxide containing gas; and
a first recovery separation membrane configured to separate the carbon dioxide containing gas into a first recovery separation membrane permeate gas and a first recovery separation membrane residual gas, and circulate the first recovery separation membrane permeate gas to the first compressor, the first capture separation membrane or the second compressor.

2. The apparatus for capturing carbon dioxide in flue gas according to claim 1, further comprising:
a second capture separation membrane configured to separate a second capture separation membrane feed gas including the first capture separation membrane permeate gas into a second capture separation membrane permeate gas and a second capture separation membrane residual gas,
wherein only the second capture separation membrane permeate gas in the first capture separation membrane permeate gas is compressed by the second compressor.

3. The apparatus for capturing carbon dioxide in flue gas according to claim 1, wherein a temperature of the gas fed into the first recovery separation membrane is -40 to 0°C.

4. The apparatus for capturing carbon dioxide in flue gas according to claim 1, wherein the first recovery separation membrane is made of at least one of polysulfone (PSF) or polyimide (PI).

5. The apparatus for capturing carbon dioxide in flue gas according to claim 1, further comprising, before feeding the gas compressed by the first compressor into the first capture separation membrane,
a first heat exchanger network configured to cool down by heat exchange with at least one of the first capture separation membrane permeate gas, the first capture separation membrane residual gas, the carbon dioxide containing gas, the first recovery separation membrane permeate gas or the first recovery separation membrane residual gas.

6. The apparatus for capturing carbon dioxide in flue gas according to claim 2, further comprising, before feeding at least one capture separation membrane feed gas of the gas compressed by the first compressor or the first capture separation membrane permeate gas into the separation membrane,
a heat exchanger network configured to cool down by heat exchange with at least one of the first capture separation membrane permeate gas, the first capture separation membrane residual gas, the second capture separation membrane permeate gas, the second capture separation membrane residual gas, the carbon dioxide containing gas, the first recovery separation membrane permeate gas or the first recovery separation membrane residual gas.

7. The apparatus for capturing carbon dioxide in flue gas according to claim 2, further comprising:
a #2-1 capture separation membrane configured to separate the second capture separation membrane residual gas into a #2-1 capture separation membrane permeate gas and a #2-1 capture separation membrane residual gas;
a #2-2 heat exchanger configured to exchange heat between the first capture separation membrane permeate gas and the first recovery separation membrane permeate gas;
a #2-3 heat exchanger configured to exchange heat between the first capture separation membrane permeate gas cooled by the #2-2 heat exchanger and the #2-1 capture separation membrane permeate gas;
a #2-4 heat exchanger configured to exchange heat between the first capture separation membrane permeate gas cooled by the #2-3 heat exchanger and at least one of the #2-1 capture separation membrane residual gas or the first recovery separation membrane residual gas;
a #2-5 heat exchanger configured to exchange heat between the first capture separation membrane permeate gas cooled by the #2-4 heat exchanger and the second capture separation membrane permeate gas; and
a #2-6 heat exchanger configured to exchange heat between the first capture separation membrane permeate gas cooled by the #2-5 heat exchanger and the carbon dioxide containing gas,
wherein the #2-1 capture separation membrane permeate gas is circulated to the first compressor, the first capture separation membrane or the second capture separation membrane.

8. The apparatus for capturing carbon dioxide in flue gas according to claim 1, further comprising:
a dry ice production unit including a chamber in which the high purity carbon dioxide liquid is received and converted to dry ice and an outlet through which a residual carbon dioxide gas not having been converted to the dry ice exits.

9. The apparatus for capturing carbon dioxide in flue gas according to claim 8, wherein the residual carbon dioxide gas is circulated to the first capture separation membrane.

10. The apparatus for capturing carbon dioxide in flue gas according to claim 8, further comprising:
a second capture separation membrane configured to separate a second capture separation membrane feed gas including the first capture separation membrane permeate gas into a second capture separation membrane permeate gas and a second capture separation membrane residual gas;
a #2-1 capture separation membrane configured to separate the second capture separation membrane residual gas into a #2-1 capture separation membrane permeate gas and a #2-1 capture separation membrane residual gas;
a first heat exchanger network including a #1-1 heat exchanger configured to exchange heat between the gas compressed by the first compressor and the #2-1 capture separation membrane permeate gas; a #1-2 heat exchanger configured to exchange heat between the gas compressed by the first compressor and cooled by the #1-1 heat exchanger and the first capture separation membrane permeate gas; and a #1-3 heat exchanger configured to exchange heat between the gas compressed by the first compressor and cooled by the #1-2 heat exchanger and a nitrogen dominated gas including at least one of the first capture separation membrane residual gas, the #2-1 capture separation membrane residual gas or the first recovery separation membrane residual gas; and
a second heat exchanger network including a #2-1 heat exchanger configured to exchange heat between the first capture separation membrane permeate gas and the second capture separation membrane permeate gas; and a #2-2 heat exchanger configured to exchange heat between the first capture separation membrane permeate gas cooled by the #2-1 heat exchanger and the gas heated by the #1-2 heat exchanger,
wherein only the second capture separation membrane permeate gas in the first capture separation membrane permeate gas is compressed by the second compressor, and
wherein the #2-1 capture separation membrane permeate gas is circulated to the first compressor, the first capture separation membrane or the second capture separation membrane.

11. A process for capturing carbon dioxide in flue gas, comprising:
a first compression step of compressing, by a first compressor, a first compressor feed gas including flue gas;
a first capture step of feeding a first capture separation membrane feed gas including the gas compressed by the first compressor into a first capture separation membrane to separate into a first capture separation membrane permeate gas and a first capture separation membrane residual gas;
a second compression step of compressing, by a second compressor, a second compressor feed gas including the first capture separation membrane permeate gas;
a liquefaction step of cooling down, by a liquefaction heat exchanger, the gas compressed by the second compressor;
a separation and purification step of feeding the gas cooled by the liquefaction heat exchanger into a separation tower to separate into a carbon dioxide containing gas and a high purity carbon dioxide liquid; and
a first recovery step of feeding the carbon dioxide containing gas into a first recovery separation membrane to circulate a first recovery separation membrane permeate gas passing through the first recovery separation membrane to the first compressor, the first capture separation membrane or the second compressor.

12. The process for capturing carbon dioxide in flue gas according to claim 11, further comprising:
a second capture step of feeding a second capture separation membrane feed gas including the first capture separation membrane permeate gas into a second capture separation membrane to separate into a second capture separation membrane permeate gas and a second capture separation membrane residual gas,
wherein the second compression step comprises compressing, by the second compressor, only the second capture separation membrane permeate gas in the first capture separation membrane permeate gas.

13. The process for capturing carbon dioxide in flue gas according to claim 11, wherein the first recovery separation membrane is made of at least one of polysulfone (PSF) or polyimide (PI).

14. The process for capturing carbon dioxide in flue gas according to claim 11, further comprising:
a dry ice production step of converting the high purity carbon dioxide liquid to dry ice, and obtaining a residual carbon dioxide gas not having been converted to the dry ice.

15. The process for capturing carbon dioxide in flue gas according to claim 11, further comprising, before feeding the gas compressed by the first compressor into the first capture separation membrane,
a heat exchange step of exchanging, by a heat exchanger network, heat with at least one of the first capture separation membrane permeate gas, the first capture separation membrane residual gas, the carbon dioxide containing gas, the first recovery separation membrane permeate gas or the first recovery separation membrane residual gas.
